(19)

Europäisches
Patentamt
European
Patent Office
Office européen
des brevets

(11) **EP 4 024 261 A1**

(12) **EUROPEAN PATENT APPLICATION**
published in accordance with Art. 153(4) EPC

(43) Date of publication:
**06.07.2022 Bulletin 2022/27**

(21) Application number: **20866562.0**

(22) Date of filing: **17.09.2020**

(51) International Patent Classification (IPC):
**G06F 30/27** (2020.01)   **G06N 20/00** (2019.01)

(52) Cooperative Patent Classification (CPC):
**G06F 30/27; G06K 9/62; G06N 20/00**

(86) International application number:
**PCT/CN2020/115770**

(87) International publication number:
**WO 2021/052394 (25.03.2021 Gazette 2021/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **17.09.2019  CN 201910878280**

(71) Applicant: **Huawei Technologies Co., Ltd.
Longgang District
Shenzhen,
Guangdong 518129 (CN)**

(72) Inventors:
• **XUE, Li**
  **Shenzhen, Guangdong 518129 (CN)**
• **ZHANG, Yanfang**
  **Shenzhen, Guangdong 518129 (CN)**
• **ZHANG, Hao**
  **Shenzhen, Guangdong 518129 (CN)**
• **ZHANG, Liang**
  **Shenzhen, Guangdong 518129 (CN)**
• **LI, Yang**
  **Shenzhen, Guangdong 518129 (CN)**

(74) Representative: **Gill Jennings & Every LLP
The Broadgate Tower
20 Primrose Street
London EC2A 2ES (GB)**

(54) **MODEL TRAINING METHOD, APPARATUS, AND SYSTEM**

(57)    This application discloses a model training method, apparatus, and system, and belongs to the AI field. The method includes: receiving a machine learning model sent by a first analysis device; and performing incremental training on the machine learning model based on a first training sample set, where feature data in the first training sample set is feature data from a local network corresponding to a local analysis device. In this application, a problem that the machine learning model obtained through offline training cannot be effectively adapted to a requirement of the local analysis device is resolved. Embodiments of this application are used to predict a classification result.

First analysis device

Local analysis device

401. Perform offline training based on a historical training sample set to obtain a machine learning model

402. Send the machine learning model

403. Predict a classification result by using the machine learning model

404. Perform incremental training on the machine learning model based on a first training sample set obtained by the local analysis device

405. When performance of the machine learning model obtained through incremental training does not meet a performance fulfillment condition, trigger a cloud analysis device to retrain the machine learning model

FIG. 4

**EP 4 024 261 A1**

**Description**

**TECHNICAL FIELD**

This application relates to the artificial intelligence (Artificial Intelligence, AI) field, and in particular, to a model training method, apparatus, and system.

**BACKGROUND**

Machine learning is to enable a machine to obtain a machine learning model through training based on a training sample, so that the machine learning model is capable of predicting a category for a sample other than the training sample.

Currently, a data analysis system includes a plurality of analysis devices used for data analysis. The plurality of analysis devices may include a cloud analysis device and a local analysis device. A method for deploying the machine learning model in the system includes the following: The cloud analysis device performs offline training on a model, and directly deploys, on the local analysis device, the model obtained through offline training.

However, the model obtained through training possibly cannot be effectively adapted to a requirement of the local analysis device.

**SUMMARY**

Embodiments of this application provide a model training method, apparatus, and system. The technical solutions are as follows:

According to a first aspect, a model training method is provided, applied to a local analysis device, and including:

receiving a machine learning model sent by a first analysis device, where optionally, the first analysis device is a cloud analysis device; and

performing incremental training on the machine learning model based on a first training sample set, where feature data in the first training sample set is feature data from a local network corresponding to the local analysis device.

In an aspect, the feature data in the first training sample set is feature data obtained from the local network corresponding to the local analysis device, and is better adapted to an application scenario of the local analysis device. The first training sample set including the feature data obtained by the local analysis device from the corresponding local network is used to perform model training, so that the machine learning model obtained through training is better adapted to a requirement of the local analysis device, to implement model customization, and improve model application flexibility. In another aspect, the machine learning model is trained in a manner of combining offline training and incremental training, so that incremental training can be performed on the machine learning model when a category or a pattern of the feature data obtained by the local analysis device changes, to implement flexible adjustment of the machine learning model, and ensure that the machine learning model obtained through training meets the requirement of the local analysis device. Therefore, compared with a related technology, the model training method provided in this embodiment of this application can be effectively adapted to the requirement of the local analysis device.

Optionally, after the receiving a machine learning model sent by a first analysis device, the method further includes:

predicting a classification result by using the machine learning model.

Optionally, the method further includes: sending prediction information to an evaluation device, where the prediction information includes the predicted classification result, so that the evaluation device evaluates, based on the prediction information, whether the machine learning model is degraded. In an example, the local analysis device may send prediction information to the evaluation device after the local analysis device predicts a classification result by using the machine learning model each time, where the prediction information includes the predicted classification result. In another example, the local analysis device may periodically send prediction information to the evaluation device, where the prediction information includes a classification result obtained in a current period. In still another example, the local analysis device may send prediction information to the evaluation device after a quantity of obtained classification results reaches a quantity threshold, where the prediction information includes the obtained classification result. In yet another example, the local analysis device may send prediction information to the evaluation device within a specified time segment, where the prediction information includes a currently obtained classification result. In this way, interference to a user service can be avoided.

The performing incremental training on the machine learning model based on a first training sample set includes: after receiving a training instruction sent by the evaluation device, performing incremental training on the machine learning model based on the first training sample set, where the training instruction is used to instruct to train the machine learning model.

Optionally, the machine learning model is used to predict a classification result of to-be-predicted data including one or more pieces of key performance indicator KPI feature data, and the KPI feature data is feature data of a KPI time series or is KPI data; and

the prediction information further includes a KPI category corresponding to the KPI feature data in the to-be-predicted data, an identifier of a device to which the to-be-predicted data belongs, and a collection moment of KPI data corresponding to the to-be-predicted data.

Optionally, the method further includes:

when performance of the machine learning model obtained through incremental training does not meet a performance fulfillment condition, sending a retraining request to the first analysis device, where the retraining request is used to request the first analysis device to retrain the machine learning model.

Optionally, the machine learning model is a tree model, and the performing incremental training on the machine learning model based on a first training sample set includes:

for any training sample in the first training sample set, starting traversal from a root node of the machine learning model, to execute the following traversal process:

when a current split cost of a traversed first node is less than a historical split cost of the first node, adding an associated second node, where the first node is any non-leaf node in the machine learning model, and the second node is a parent node or a child node of the first node; or

when a current split cost of a first node is not less than a historical split cost of the first node, traversing each node in a subtree of the first node, determining a traversed node as a new first node, and executing the traversal process again until a current split cost of the traversed first node is less than a historical split cost of the first node or until traversal is performed at a target depth, where

the current split cost of the first node is a cost at which node split is performed on the first node based on a first training sample, the first training sample is any training sample in the first training sample set, the first training sample includes feature data in one or more feature dimensions, the feature data is value data, the historical split cost of the first node is a cost at which node split is performed on the first node based on a historical training sample set of the first node, and the historical training sample set of the first node is a set of samples that are grouped to the first node and that are in a historical training sample set of the machine learning model.

Optionally, the current split cost of the first node is negatively correlated with a size of a first value distribution range, the first value distribution range is a distribution range determined based on a feature value in the first training sample and a second value distribution range, the second value distribution range is a distribution range of feature values in the historical training sample set of the first node, and the historical split cost of the first node is negatively correlated with a size of the second value distribution range.

Optionally, the current split cost of the first node is a reciprocal of a sum of spans of feature values that are in all feature dimensions and that fall within the first value distribution range, and the historical split cost of the first node is a reciprocal of a sum of spans of feature values that are in all the feature dimensions and that fall within the second value distribution range.

In the incremental training process, node split is performed based on a value distribution range of a training sample set, and there is no need to access a large quantity of historical training samples. Therefore, occupation of a memory resource and a computing resource is effectively reduced, and a training cost is reduced. In addition, node information carries related information of each node, so that the machine learning model can be lightweight, to further facilitate deployment of the machine learning model, and implement effective model generalization.

Optionally, the adding an associated second node includes:

determining span ranges of feature values that are in all feature dimensions and that fall within the first value distribution range; and

adding the second node based on a first split point in a first split dimension, where a value range that is in the first value distribution range and in which a value in the first split dimension is not greater than a value of the first split point is allocated to a left child node of the second node, a value range that is in the first value distribution range and in which a value in the first split dimension is greater than the value of the first split point is allocated to a right child node of the second node, the first split dimension is a split dimension determined from all the feature dimensions based on the span ranges of the feature values in all the feature dimensions, and the first split point is a value point that is determined in the first split dimension of the first value distribution range and that is used for split, where

when the first split dimension is different from a second split dimension, the second node is a parent node or a child node of the first node, the second split dimension is a historical split dimension of the first node in the machine learning model, and a second split point is a historical split point of the first node in the machine learning model;

when the first split dimension is the same as the second split dimension, and the first split point is located on the right of the second split point, the second node is a parent node of the first node, and the first node is a left child node of the second node; or

when the first split dimension is the same as the second split dimension, and the first split point is located on the left of the second split point, the second node is a left child node of the first node.

Optionally, a first split dimension is a feature dimension randomly selected from all feature dimensions of the first value distribution range, or a first split dimension is a feature dimension that corresponds to a largest span and that is in all feature dimensions of the first value distribution range; and/or

a first split point is a value point randomly selected in the first split dimension of the first value distribution range.

Optionally, the adding an associated second node includes:

adding the second node when a sum of a quantity of samples in the historical training sample set of the first node and a quantity of first training samples is greater than a first sample quantity threshold; and

the method further comprises:

stopping incremental training of the machine learning model when the sum of the quantity of samples in the historical training sample set of the first node and the quantity of first training samples is not greater than the first sample quantity threshold.

Optionally, the method further includes:

combining a first non-leaf node and a second non-leaf node in the machine learning model, and combining a first leaf node and a second leaf node, to obtain a reduced machine learning model, where the reduced machine learning model is used to predict a classification result; or

receiving a reduced machine learning model sent by the first analysis device, where the reduced machine learning model is obtained after the first analysis device combines a first non-leaf node and a second non-leaf node in the machine learning model, and combines a first leaf node and a second leaf node, where

the first leaf node is a child node of the first non-leaf node, the second leaf node is a child node of the second non-leaf node, the first leaf node and the second leaf node include a same classification result, and span ranges of feature values that are in historical training sample sets allocated to the two leaf nodes and that are in a same feature dimension are adjacent.

The reduced machine learning model has a simpler structure, so that a quantity of branch levels of a tree is reduced, and a quantity of levels of the tree is prevented from being excessively large. Although a model architecture changes, a prediction result of the model is not affected. This can save storage space, and improve prediction efficiency. In addition, model overfitting can be avoided by using the reduction process. Further, if the reduced model is only used for sample analysis, historical split information may not be recorded in node information in the model. In this way, this can further reduce a size of the model and improve prediction efficiency of the model.

Optionally, each node in the machine learning model correspondingly stores node information, the node information of any node in the machine learning model includes label distribution information, the label distribution information is used to reflect proportions of labels of different categories, of a sample in a historical training sample set allocated to the corresponding node, to a total label quantity, the total label quantity is a total quantity of labels corresponding to the sample in the historical training sample set allocated to the any node, node information of any non-leaf node further includes historical split information, and the historical split information is information used to split the corresponding node.

Optionally, the historical split information includes location information of the corresponding node in the machine learning model, a split dimension of the corresponding node, a split point of the corresponding node, a value distribution range of a historical training sample set allocated to the corresponding node, and a historical split cost of the corresponding node; and

the label distribution information includes the total label quantity and a quantity of labels of a same category of the sample in the historical training sample set allocated to the corresponding node; or the proportions of the labels of different categories, of the sample in the historical training sample set allocated to the corresponding node, to the total label quantity.

Optionally, the first training sample set includes a sample that is obtained by screening a sample obtained by the local analysis device and that meets a low discrimination condition, and the low discrimination condition includes at least one of the following:

an absolute value of a difference between any two probabilities in a target probability set obtained by predicting a sample by using the machine learning model is less than a first difference threshold, where the target probability set includes probabilities of first n classification results arranged in descending order of probabilities, $1<n<m$, and m is a total quantity of probabilities obtained by predicting the sample by using the machine learning model; or

an absolute value of a difference between any two probabilities in probabilities obtained by predicting a sample by using the machine learning model is less than a second difference threshold; or

an absolute value of a difference between a highest probability and a lowest probability in probabilities that are of a plurality of classification results and that are obtained by predicting a sample by using the machine learning model is less than a third difference threshold; or

an absolute value of a difference between any two probabilities in probabilities that are of a plurality of classification results and that are obtained by predicting a sample by using the machine learning model is less than a fourth difference threshold; or

probability distribution entropy E that is of a plurality of classification results and that is obtained by predicting a sample by using the machine learning model is greater than a specified distribution entropy threshold, and E meets:

$$E = -\sum_i P(\mathrm{x}_i)\log_b P(\mathrm{x}_i)$$ , where

$x_i$ represents an $i^{th}$ classification result, $P(x_i)$ represents a probability that is of the $i^{th}$ classification result of the sample and that is obtained through prediction, b is a specified base, and $0 \leq P(x_i) \leq 1$.

According to a second aspect, a model training method is provided, applied to a first analysis device. For example, the first analysis device may be a cloud analysis device, and the method includes:

performing offline training based on a historical training sample set to obtain a machine learning model; and sending the machine learning model to a plurality of local analysis devices, so that the local analysis device performs incremental training on the machine learning model based on a first training sample set, where feature data in a training sample set used by any local analysis device to train the machine learning model is feature data from a local network corresponding to the any local analysis device.

In this embodiment of this application, the first analysis device may distribute, to each local analysis device, the machine learning model obtained through training, so that each local analysis device performs incremental training, to ensure performance of the machine learning model on each local analysis device. In this way, the first analysis device does not need to train a corresponding machine learning model for each local analysis device, to effectively reduce overall training duration of the first analysis device. In addition, the model obtained through offline training may be used as a basis for performing incremental training by each local analysis device, to improve universality of the model obtained through offline training, implement model generalization, and reduce an overall training cost of the first analysis device.

Optionally, the historical training sample set is a set of training samples sent by the plurality of local analysis devices.

Optionally, after the machine learning model is sent to the local analysis device, the method further includes:

receiving a retraining request sent by the local analysis device, and retraining the machine learning model based on a training sample set sent by the local analysis device that sends the retraining request; or

receiving a retraining request sent by the local analysis device, and retraining the machine learning model based on a training sample set sent by the local analysis device that sends the retraining request and a training sample set sent by another local analysis device; or

receiving training sample sets sent by at least two of the local analysis devices, and retraining the machine learning model based on the received training sample sets.

Optionally, the machine learning model is a tree model, and the performing offline training based on a historical training sample set to obtain a machine learning model includes:

obtaining a historical training sample set having a determined label, where a training sample in the historical training sample set includes feature data in one or more feature dimensions, and the feature data is value data;

creating a root node;

using the root node as a third node, and executing an offline training process until a split stop condition is met; and

determining a classification result for each leaf node to obtain the machine learning model, where the offline training process includes:

splitting the third node to obtain a left child node and a right child node of the third node;

using the left child node as an updated third node, using, as an updated historical training sample set, a left sample set that is in the historical training sample set and that is allocated to the left child node, and executing the offline training process again; and

using the right child node as the updated third node, using, as the updated historical training sample set, a right sample set that is in the historical training sample set and that is allocated to the right child node, and executing the offline training process again.

In an optional manner, the splitting the third node to obtain a left child node and a right child node of the third node includes:

splitting the third node based on a value distribution range of the historical training sample set to obtain the left child node and the right child node of the third node, where the value distribution range of the historical training sample set is a distribution range of feature values in the historical training sample set.

Optionally, the splitting the third node based on a value distribution range of the historical training sample set to obtain the left child node and the right child node of the third node includes:

determining a third split dimension from all feature dimensions of the historical training sample set;
determining a third split point in the third split dimension of the historical training sample set; and
allocating, to the left child node, a value range that is in a third value distribution range and in which a value in the third split dimension is not greater than a value of the third split point, and allocating, to the right child node, a value range that is in the third value distribution range and in which a value in the third split dimension is greater than the value of the third split point, where the third value distribution range is the distribution range of the feature values in the historical training sample set of the third node.

In the offline training process, node split is performed based on a value distribution range of a training sample set, and there is no need to access a large quantity of historical training samples. Therefore, occupation of a memory resource and a computing resource is effectively reduced, and a training cost is reduced. In addition, node information carries related information of each node, so that the machine learning model can be lightweight, to further facilitate deployment of the machine learning model, and implement effective model generalization.

In another optional manner, because the first analysis device has obtained the foregoing historical training sample set used for training, node split may be directly performed by using a sample. The splitting the third node to obtain a left child node and a right child node of the third node may alternatively include: allocating, to the left child node, a sample that is in the historical training sample set and whose feature value in a third split dimension is not greater than a value of a third split point, and allocating, to the right child node, a sample that is in the historical training sample set and whose feature value in the third split dimension is greater than the value of the third split point.

Optionally, the split stop condition includes at least one of the following:

A current split cost of the third node is greater than a split cost threshold, so that excessive split of a tree can be avoided, and operation overheads can be reduced.

Alternatively, a quantity of samples in the historical training sample set is less than a second sample quantity threshold. In this case, it indicates that the historical training sample set has a small amount of data that is not insufficient to support effective node split. In this case, the offline training process is stopped, so that operation overheads can be reduced.

Alternatively, a quantity of split times corresponding to the third node is greater than a threshold of a quantity of split times. In this case, it indicates that a current quantity of split times in the machine learning model has reached an upper limit. In this case, the offline training process is stopped, so that operation overheads can be reduced.

Alternatively, a depth of the third node in the machine learning model is greater than a depth threshold, so that a depth of the machine learning model can be controlled.

Alternatively, a proportion of a quantity of labels with a largest proportion, in labels corresponding to the historical training sample set, to a total label quantity of the labels corresponding to the historical training sample set is greater than a specified proportion threshold. In this case, it indicates that the quantity of labels with the largest proportion already meets a classification condition, and an accurate classification result may be determined based on the case. In this case, the offline training process is stopped, so that unnecessary split can be reduced, and operation overheads can be reduced.

Optionally, the current split cost of the third node is negatively correlated with a size of the distribution range of the feature values in the historical training sample set.

Optionally, the current split cost of the third node is a reciprocal of a sum of spans of feature values that are in all the feature dimensions and that are in the historical training sample set.

Optionally, the method further includes:

combining a first non-leaf node and a second non-leaf node in the machine learning model, and combining a first leaf node and a second leaf node, to obtain a reduced machine learning model, where the reduced machine learning model is used to predict a classification result, the first leaf node is a child node of the first non-leaf node, the second leaf node is a child node of the second non-leaf node, the first leaf node and the second leaf node include a same classification result, and span ranges of feature values that are in historical training sample sets allocated to the two leaf nodes and that are in a same feature dimension are adjacent; and

sending the reduced machine learning model to the local analysis device, so that the local analysis device predicts a classification result based on the reduced machine learning model.

Optionally, each node in the machine learning model correspondingly stores node information, the node information of any node in the machine learning model includes label distribution information, the label distribution information is used to reflect proportions of labels of different categories, of a sample in a historical training sample set allocated to the corresponding node, to a total label quantity, the total label quantity is a total quantity of labels corresponding to the sample in the historical training sample set allocated to the any node, node information of any non-leaf node further includes historical split information, and the historical split information is information used to split the corresponding node.

Optionally, the historical split information includes location information of the corresponding node in the machine learning model, a split dimension of the corresponding node, a split point of the corresponding node, a value distribution range of a historical training sample set allocated to the corresponding node, and a historical split cost of the corresponding node; and

the label distribution information includes the total label quantity and a quantity of labels of a same category of the sample in the historical training sample set allocated to the corresponding node; or the proportions of the labels of different categories, of the sample in the historical training sample set allocated to the corresponding node, to the total label quantity.

Optionally, the first training sample set includes a sample that is obtained by screening a sample obtained by the local analysis device and that meets a low discrimination condition, and the low discrimination condition includes at least one of the following:

an absolute value of a difference between any two probabilities in a target probability set obtained by predicting a sample by using the machine learning model is less than a first difference threshold, where the target probability set includes probabilities of first n classification results arranged in descending order of probabilities, $1<n<m$, and m is a total quantity of probabilities obtained by predicting the sample by using the machine learning model; or

an absolute value of a difference between any two probabilities in probabilities obtained by predicting a sample by using the machine learning model is less than a second difference threshold; or

an absolute value of a difference between a highest probability and a lowest probability in probabilities that are of a plurality of classification results and that are obtained by predicting a sample by using the machine learning model is less than a third difference threshold; or

an absolute value of a difference between any two probabilities in probabilities that are of a plurality of classification results and that are obtained by predicting a sample by using the machine learning model is less than a fourth difference threshold; or

probability distribution entropy E that is of a plurality of classification results and that is obtained by predicting a sample by using the machine learning model is greater than a specified distribution entropy threshold, and E meets:

$$E = -\sum_{i} P(\mathrm{x}_i) \log_b P(\mathrm{x}_i)$$
,

where

$x_i$ represents an $i^{th}$ classification result, $P(x_i)$ represents a probability that is of the $i^{th}$ classification result of the sample and that is obtained through prediction, b is a specified base, and $0 \leq P(x_i) \leq 1$.

According to a third aspect, a model training apparatus is provided, where the apparatus includes a plurality of functional modules. The plurality of functional modules interact with each other to implement the method in the first aspect and the implementations of the first aspect. The plurality of functional modules may be implemented based on software, hardware, or a combination of software and hardware, and the plurality of functional modules may be randomly combined or divided based on specific implementation.

According to a fourth aspect, a model training apparatus is provided, where the apparatus includes a plurality of functional modules. The plurality of functional modules interact with each other to implement the method in the second aspect and the implementations of the second aspect. The plurality of functional modules may be implemented based on software, hardware, or a combination of software and hardware, and the plurality of functional modules may be randomly combined or divided based on specific implementation.

According to a fifth aspect, a model training apparatus is provided, including a processor and a memory, where

the memory is configured to store a computer program, where the computer program includes program instructions; and

the processor is configured to invoke the computer program to implement the model training method according to any one of the first aspect or implement the model training method according to any one of the second aspect.

According to a sixth aspect, a computer storage medium is provided, where the computer storage medium stores instructions, and when the instructions are executed by a processor, the model training method according to any one of the first aspect is implemented, or the model training method according to any one of the second aspect is implemented.

According to a seventh aspect, a chip is provided, where the chip includes a programmable logic circuit and/or program instructions, and when the chip runs, the model training method according to any one of the first aspect is implemented, or the model training method according to any one of the second aspect is implemented.

According to an eighth aspect, a computer program product is provided, where the computer program product stores instructions, and when the instructions are run on a computer, the computer is enabled to perform the model training method according to any one of the first aspect, or the computer is enabled to perform the model training method according to any one of the second aspect.

The technical solutions provided in the embodiments of this application bring the following beneficial effects.

In the model training method provided in the embodiments of this application, the local analysis device receives the machine learning model sent by the first analysis device, and may perform incremental training on the machine learning model based on the first training sample set obtained from the local network corresponding to the local analysis device. In an aspect, the feature data in the first training sample set is feature data obtained from the local network corresponding to the local analysis device, and is better adapted to the application scenario of the local analysis device. The first training sample set including the feature data obtained by the local analysis device from the corresponding local network is used to perform model training, so that the machine learning model obtained through training is better adapted to the requirement of the local analysis device, to implement model customization, and improve model application flexibility. In another aspect, the machine learning model is trained in a manner of combining offline training and incremental training, so that incremental training can be performed on the machine learning model when a category or a pattern of the feature data obtained by the local analysis device changes, to implement flexible adjustment of the machine learning model, and ensure that the machine learning model obtained through training meets the requirement of the local analysis device. Therefore, compared with the related technology, the model training method provided in the embodiments of this application can be effectively adapted to the requirement of the local analysis device.

Further, the first analysis device may distribute, to each local analysis device, the machine learning model obtained through training, so that each local analysis device performs incremental training, to ensure performance of the machine learning model on each local analysis device. In this way, the first analysis device does not need to train a corresponding machine learning model for each local analysis device, to effectively reduce overall training duration of the first analysis device. In addition, the model obtained through offline training may be used as a basis for performing incremental training by each local analysis device, to improve universality of the model obtained through offline training, implement model generalization, and reduce an overall training cost of the first analysis device.

The reduced machine learning model has a simpler structure, so that a quantity of branch levels of a tree is reduced, and a quantity of levels of the tree is prevented from being excessively large. Although a model architecture changes, a prediction result of the model is not affected. This can save storage space, and improve prediction efficiency. In addition, model overfitting can be avoided by using the reduction process. Further, if the reduced model is only used for sample analysis, historical split information may not be recorded in node information in the model. In this way, this can further reduce a size of the model and improve prediction efficiency of the model.

In the embodiments of this application, in the incremental training or offline training process, node split is performed based on a value distribution range of a training sample set, and there is no need to access a large quantity of historical training samples. Therefore, occupation of a memory resource and a computing resource is effectively reduced, and a training cost is reduced. In addition, the foregoing node information carries related information of each node, so that the machine learning model can be lightweight, to further facilitate deployment of the machine learning model, and implement effective model generalization.

## BRIEF DESCRIPTION OF DRAWINGS

FIG. 1 is a schematic diagram of an application scenario of a model training method according to an embodiment of this application;

FIG. 2 is a schematic diagram of another application scenario of a model training method according to an embodiment of this application;

FIG. 3 is a schematic diagram of still another application scenario of a model training method according to an embodiment of this application;

FIG. 4 is a schematic flowchart of a model training method according to an embodiment of this application;

FIG. 5 is a flowchart of a method for controlling, based on an evaluation result of a classification result, a local analysis device to perform incremental training on a machine learning model according to an embodiment of this application;

FIG. 6 is a schematic diagram of a tree structure according to an embodiment of this application;

FIG. 7 is a schematic diagram of a split principle of a tree model according to an embodiment of this application;

FIG. 8 is a schematic diagram of a split principle of another tree model according to an embodiment of this application;

FIG. 9 is a schematic diagram of a split principle of still another tree model according to an embodiment of this application;

FIG. 10 is a schematic diagram of a split principle of yet another tree model according to an embodiment of this application;

FIG. 11 is a schematic diagram of a split principle of a tree model according to another embodiment of this application;

FIG. 12 is a schematic diagram of a split principle of another tree model according to another embodiment of this application;

FIG. 13 is a schematic diagram of a split principle of still another tree model according to another embodiment of this application;

FIG. 14 is a schematic diagram of a split principle of yet another tree model according to another embodiment of this application;

FIG. 15 is a schematic diagram of a split principle of a tree model according to still another embodiment of this application;

FIG. 16 is a schematic diagram of a split principle of another tree model according to still another embodiment of this application;

FIG. 17 is a schematic diagram of a split principle of still another tree model according to still another embodiment of this application;

FIG. 18 is a schematic diagram of an incremental training effect of a conventional machine learning model;

FIG. 19 is a schematic diagram of an incremental training effect of a machine learning model according to an embodiment of this application;

FIG. 20 is a schematic diagram of a structure of a model training apparatus according to an embodiment of this application;

FIG. 21 is a schematic diagram of a structure of another model training apparatus according to an embodiment of this application;

FIG. 22 is a schematic diagram of a structure of still another model training apparatus according to an embodiment of this application;

FIG. 23 is a schematic diagram of a structure of yet another model training apparatus according to an embodiment of this application;

FIG. 24 is a schematic diagram of a structure of a model training apparatus according to another embodiment of this application;

FIG. 25 is a schematic diagram of a structure of another model training apparatus according to another embodiment of this application;

FIG. 26 is a schematic diagram of a structure of still another model training apparatus according to another embodiment of this application; and

FIG. 27 is a block diagram of an analysis device according to an embodiment of this application.

## DESCRIPTION OF EMBODIMENTS

To make objectives, technical solutions, and advantages of this application clearer, the following further describes implementations of this application in detail with reference to accompanying drawings.

For ease of understanding by a reader, in embodiments of this application, a machine learning algorithm in a provided model training method is briefly described.

As an important branch of the AI field, the machine learning algorithm is widely applied to many fields. From a perspective of a learning method, the machine learning algorithm may fall into the following types: a supervised learning algorithm, an unsupervised learning algorithm, a semi-supervised learning algorithm, and a reinforcement learning algorithm. The supervised learning algorithm means that an algorithm may be learned or a pattern may be established based on training data, to infer a new instance based on the algorithm or the pattern. The training data, also referred to as a training sample, includes input data and an expected output. A model of the machine learning algorithm is also referred to as a machine learning model, and an expected output of the model is referred to as a label that may be a predicted classification result (referred to as a classification label). A difference between the unsupervised learning algorithm and the supervised learning algorithm lies in that a training sample of the unsupervised learning algorithm has no given label, and the model of the machine learning algorithm obtains a specified result by analyzing the training sample. For the semi-supervised learning algorithm, some training samples thereof have labels and some other training samples have no label, and an amount of data having no label is far greater than an amount of data having a label. With constant attempts in an environment, the reinforcement learning algorithm obtains a maximum expected benefit, and generates, by using a reward or a penalty given in the environment, a choice for obtaining a maximum benefit.

It should be noted that each training sample includes feature data in one or more dimensions, that is, includes feature data of one or more features. For example, in a scenario in which a classification result of key performance indicator (key performance indicator, KPI) data is predicted, the feature data may be specifically KPI feature data. The KPI feature data is feature data generated based on the KPI data. The KPI feature data may be feature data of a KPI time series, namely, data obtained by extracting a feature from the KPI time series. Alternatively, the KPI feature data may be directly the KPI data. A KPI may be specifically a network KPI, and the network KPI may include KPIs of various categories such as central processing unit (central processing unit, CPU) utilization, optical power, network traffic, a packet loss rate, a delay, and/or a quantity of access users. When the KPI feature data is the feature data of the KPI time series, the KPI feature data may be specifically feature data extracted from a time series of KPI data of any one of the foregoing KPI categories. For example, a training sample includes network KPI feature data of a total of two features in a corresponding network KPI time series: a maximum value and a weighted average value. When the KPI feature data is the KPI data, the KPI feature data may be specifically KPI data of any one of the foregoing KPI categories. For example, a training sample includes network KPI feature data of a total of three features: the CPU utilization, the packet loss rate, and the delay. Further, in a scenario in which the supervised learning algorithm or the semi-supervised learning algorithm is applied, the training sample may further include a label. For example, in the foregoing scenario in which the classification result of the KPI data is predicted, it is assumed that the classification result is used to indicate whether a data sequence is abnormal. In this case, a training sample further includes a label "abnormal" or "normal".

It should be noted that the foregoing time series is a special data sequence, and is a set of a group of data arranged based on a time sequence. The time sequence is generally a data generation sequence, and data in the time series is also referred to as a data point. Generally, a time interval between data points in a time series is a constant value. Therefore, the time series may be used as discrete time data for analysis and processing.

A current training manner of the machine learning algorithm falls into an offline learning (online learning) manner and an online learning (online learning) manner.

In the offline learning (also referred to as offline training) manner, samples in a training sample set need to be input in batches into the machine learning model to perform model training, and a large amount of data is required for training. Offline learning is generally used to train a large or complex model. Therefore, a training process is often time-consuming, and a large amount of data needs to be processed.

In the online learning (also referred to as online training) manner, samples in a training sample set need to be used in small batches or one by one to perform model training, and a small amount of data is required for training. Online learning is often applied to a scenario with a high real-time requirement. An incremental learning (also referred to as incremental training) manner is a special online learning manner. A model is required to have a capability to learn a new pattern in real time, and the model is also required to have an anti-forgetting capability, that is, the model is required to remember a historically learned pattern and learn a new pattern.

In a practical task of machine learning, representative samples need to be selected to constitute a sample set to construct the machine learning model. Generally, in sample data having a label, a sample with strong correlation with a category is selected as the sample set. The label is used to identify sample data, for example, identify a category of the sample data. In the embodiments of this application, data used to train the machine learning model is sample data. In the following descriptions, training data is referred to as a training sample, a training sample set is referred to as a training sample set, and in some content, the sample data is briefly referred to as a sample.

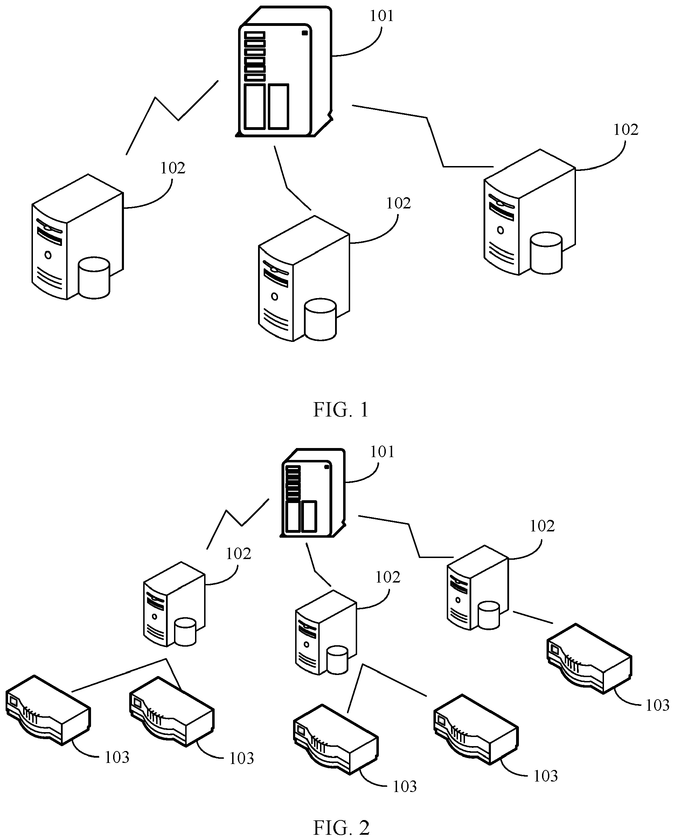

FIG. 1 is a schematic diagram of an application scenario of a model training method according to an embodiment of this application. As shown in FIG. 1, the application scenario includes a plurality of analysis devices, and the plurality of analysis devices include an analysis device 101 and a plurality of analysis devices 102. Each analysis device is used to execute a series of data analysis processes such as data mining and/or data modeling. A quantity of analysis devices 101 and a quantity of analysis devices 102 in FIG. 1 are merely an example, and are not intended to limit the application scenario of the model training method provided in the embodiments of this application.

The analysis device 101 may be specifically a cloud analysis device (also referred to as a cloud analysis platform), may be a computer, a server, a server cluster including several servers, or a cloud computing service center, and is deployed on a back end of a service network. The analysis device 102 may be specifically a local analysis device (also referred to as a local analysis platform), and may be a server, a server cluster including several servers, or a cloud computing service center. In the application scenario, a model training system in the model training method includes a plurality of local networks. The local network may be a core network or an edge network. A user in each local network may be an operator or an enterprise customer. The plurality of analysis devices 102 may be in a one-to-one correspondence with the plurality of local networks. Each analysis device 102 is used to provide a data analysis service for a corresponding local network. Each analysis device 102 may be located in the corresponding local analysis network, or may be located outside the corresponding local analysis network. Each analysis device 102 is connected to the analysis device 101 by using a wired network or a wireless network. A communication network in the embodiments of this application is a 2nd generation (2-Generation, 2G) communication network, a 3rd generation (3rd Generation, 3G) communication network, a long term evolution (Long Term Evolution, LTE) communication network, a 5th generation (5rd Generation, 5G) communication network, or the like.

In addition to performing data analysis, the analysis device 101 is further used to manage some or all services of the analysis device 102, obtain a training sample set through collection, and provide a data analysis service and the like for the analysis device 102. The analysis device 101 may obtain a machine learning model through training based on the training sample set obtained through collection (the foregoing offline learning manner is used in the process), and then deploy the machine learning model on each local analysis device, so that the local analysis device performs incremental training (the foregoing online learning manner is used in the process). Based on different training samples, different machine learning models may be obtained through training. Different machine learning models may implement different classification functions, for example, may implement functions such as anomaly detection, prediction, network security protection, application identification, or user experience evaluation (namely, evaluation of user experience).

Further, FIG. 2 is a schematic diagram of another application scenario of a model training method according to an embodiment of this application. On the basis of FIG. 1, the application scenario further includes a network device 103. Each analysis device 102 may manage a network device 103 in a network (also referred to as a local network), and the analysis device 102 is connected, by using a wired network or a wireless network, to the network device 103 managed by the analysis device 102. The network device 103 may be a router, a switch, a base station, or the like. The network device 103 is connected to the analysis device 102 by using a wired network or a wireless network. The network device 103 is used to upload collected data such as various KPI time series to the analysis device 102. The analysis device 102 is used to extract data from the network device 103 and use the data, for example, determine a label of an obtained time series. Optionally, the data uploaded by the network device 103 to the analysis device 102 may further include various log data, device status data, and the like.

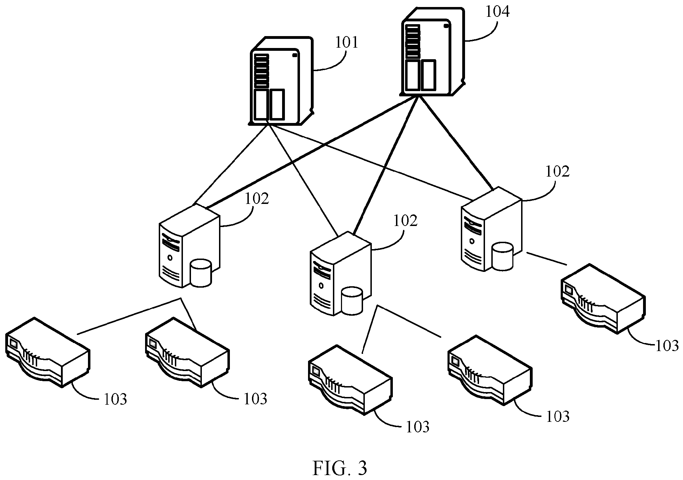

FIG. 3 is a schematic diagram of another application scenario of a model training method according to an embodiment of this application. On the basis of FIG. 1 or FIG. 2, the application scenario further includes an evaluation device 104 (FIG. 3 shows an application scenario based on FIG. 2, but imposes no limitation). The evaluation device 104 is connected to the analysis device 102 by using a wired network or a wireless network. The evaluation device 104 is used to evaluate a classification result obtained after the analysis device 102 performs data classification by using the machine learning model, and control, based on an evaluation result, the local analysis device to perform incremental training on the machine learning model.

Based on the scenarios shown in FIG. 1 to FIG. 3, the application scenario may further include a storage device, and the storage device is used to store data provided by the network device 103 or the analysis device 102. The storage device may be a distributed storage device, and the analysis device 102 or the analysis device 101 may read and write the data stored in the storage device. In this way, when there is a large amount of data in the application scenario, the storage device stores data. This can reduce load of the analysis device (for example, the analysis device 102 or the analysis device 101), and improve data analysis efficiency of the analysis device. The storage device may be used to store data having a determined label, and may perform model training by using the data having the determined label as a sample. It should be noted that, when there is a small amount of data in the application scenario, the storage device may not be disposed.

Optionally, the application scenario further includes a management device such as a network management device (also referred to as a network management platform) or a third-party management device. The management device is used to provide configuration feedback and sample labeling feedback. The management device is generally managed by operation and maintenance personnel. For example, the management device may be a computer, a server, a server cluster including several servers, or a cloud computing service center, and may be an operations support system (operations support system, OSS) or another network device connected to the analysis device. Optionally, the foregoing analysis device may select feature data and perform model update for each machine learning model, and feed back the selected feature data and a model update result to the management device, so that the management device decides whether to perform model retraining.

Further, the model training method provided in the embodiments of this application may be used in an anomaly detection scenario. Anomaly detection means detecting a pattern that does not meet an expectation. A data source of anomaly detection includes an application, a process, an operating system, a device, or a network. For example, an object of anomaly detection may be the foregoing KPI data sequence. When the model training method provided in the embodiments of this application is applied to the anomaly detection scenario, the analysis device 102 may be a network analyzer. A machine learning model maintained on the analysis device 102 is an anomaly detection model, and a determined label is an anomaly detection label. The anomaly detection label includes two types of classification labels: "normal" and "abnormal".

In the anomaly detection scenario, the foregoing machine learning model may be a model of an algorithm (for example, an N-sigma algorithm) based on statistics and data distribution, a model of an algorithm (for example, a local outlier factor algorithm) based on a distance/a density, a tree model (for example, isolation forest (Isolation forest, Iforest)), or a model (for example, an autoregressive integrated moving average model (Autoregressive Integrated Moving Average model, ARIMA)) of an algorithm based on prediction.

In a related technology, in a data analysis system, a cloud analysis device performs offline training on a model, and then directly deploys, on a local analysis device, the model obtained through offline training. However, the model obtained through training possibly cannot be effectively adapted to a requirement of the local analysis device, such as a prediction performance (such as accuracy or recall) requirement. In an aspect, a training sample in a historical training sample set used by the cloud analysis device is generally a preconfigured fixed training sample, and may not meet the requirement of the local analysis device. In another aspect, even though the machine learning model obtained through training meets the requirement of the local analysis device when the machine learning model is just deployed on the local analysis device, a category or a pattern of feature data obtained by the local analysis device changes as time goes by. Consequently, the machine learning model obtained through training no longer meets the requirement of the local analysis device.

In addition, in the related technology, the machine learning model obtained through training can be used only for a single local analysis device. When the cloud analysis device serves a plurality of local analysis devices, a corresponding machine learning model needs to be trained for each local analysis device. The model obtained through training has low universality, model generalization cannot be implemented, and a training cost is high.

The embodiments of this application provide a model training method. In a subsequent embodiment, it is assumed that the foregoing analysis device 101 is a first analysis device and the analysis device 102 is a local analysis device. The local analysis device receives a machine learning model sent by the first analysis device, and may perform incremental training on the machine learning model based on a first training sample set obtained from a local network corresponding to the local analysis device. In an aspect, feature data in the first training sample set is feature data obtained from the local network corresponding to the local analysis device, and is better adapted to an application scenario of the local analysis device. The first training sample set including the feature data obtained by the local analysis device from the corresponding local network is used to perform model training, so that the machine learning model obtained through training is better adapted to a requirement (namely, a requirement of the local network corresponding to the local analysis device) of the local analysis device, to implement model customization, and improve model application flexibility. In another aspect, the machine learning model is trained in a manner of combining offline training and incremental training, so that incremental training can be performed on the machine learning model when a category or a pattern of the feature data obtained by the local analysis device changes, to implement flexible adjustment of the machine learning model, and ensure that the machine learning model obtained through training meets the requirement of the local analysis device. Therefore, compared with the related technology, the model training method provided in the embodiments of this application can be effectively adapted to the requirement of the local analysis device.

Further, the first analysis device may distribute, to each local analysis device, the machine learning model obtained through training, so that each local analysis device performs incremental training, to ensure performance of the machine learning model on each local analysis device. In this way, the first analysis device does not need to train a corresponding machine learning model for each local analysis device, to effectively reduce overall training duration of the first analysis device. In addition, the model obtained through offline training may be used as a basis for performing incremental training by each local analysis device, to improve universality of the model obtained through offline training, implement model generalization, and reduce an overall training cost of the first analysis device.

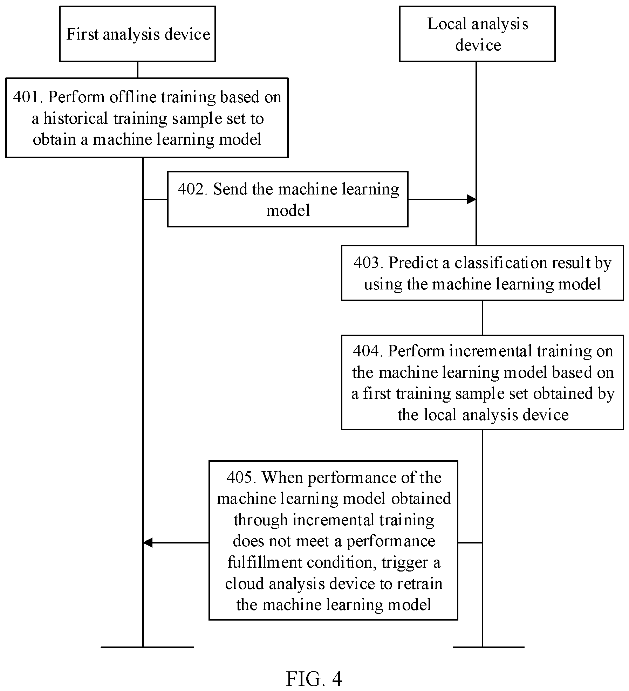

An embodiment of this application provides a model training method. The method may be applied to the application scenario shown in any one of FIG. 1 to FIG. 3. A machine learning model may be used to predict a classification result, for example, the machine learning model may be a binary classification model. For ease of differentiation, in a subsequent embodiment of this application, a classification result determined manually or through label transfer is referred to as a label, and a result predicted by the machine learning model is referred to as a classification result. The label and the classification result are substantially the same, and are both used to identify a category of a corresponding sample. An application scenario of the model training method generally includes a plurality of local analysis devices. In this embodiment of this application, one local analysis device is used as an example to describe the model training method. For an action of another local analysis device, refer to an action of the local analysis device. As shown in FIG. 4, the method includes the following steps.

Step 401. A first analysis device performs offline training based on a historical training sample set to obtain a machine learning model.

The first analysis device may continuously collect a training sample to obtain a training sample set, and perform offline training based on the training sample set (which may be referred to as the historical training sample set) obtained through collection, to obtain the machine learning model. For example, the historical training sample set may be a set of training samples sent by a plurality of local analysis devices. The machine learning model obtained through such training may be adapted to requirements of the plurality of local analysis devices, and the model obtained through training has high universality, so that model generalization can be ensured.

Referring to FIG. 2 and FIG. 3, the training sample may be obtained by the local analysis device from data collected and uploaded by a network device, and is transmitted by the local analysis device to the first analysis device. The training sample may be obtained by the first analysis device in another manner, for example, obtained from data stored in a storage device. This is not limited in this embodiment of this application.

The training sample may be in a plurality of forms. Correspondingly, the first analysis device may obtain the training sample in a plurality of manners. In this embodiment of this application, the following two optional manners are used as an example for description:

In a first optional manner, the training sample obtained by the first analysis device may include data determined based on a time series, for example, include data determined based on a KPI time series. Generally, each training sample in the historical training sample set corresponds to one time series, and each training sample may include feature data of one or more features extracted from the corresponding time series. A quantity of features corresponding to each training sample is the same as an amount of feature data in the training sample (that is, features are in a one-to-one correspondence with feature data). The feature in the training sample is a feature of a corresponding time series, and may include a data feature and/or an extraction feature.

The data feature is a feature of data in the time series. For example, the data feature includes a data arrangement period, a data change trend, or data fluctuation. Correspondingly, feature data of the data feature includes data of the data arrangement period, data of the data change trend, or data of the data fluctuation. The data arrangement period is a period for arranging the data in the time series if the data in the time series is periodically arranged, for example, the data of the data arrangement period includes period duration (namely, a time interval between two periods) and/or a period quantity. The data of the data change trend is used to reflect a change trend (namely, the data change trend) of arrangement of the data in the time series. For example, the data of the data change trend includes: continuous growth, continuous decline, rising before falling, falling before rising, or meeting normal distribution. The data of the data fluctuation is used to reflect a fluctuation state (namely, the data fluctuation) of the data in the time series. For example, the data of the data fluctuation includes a function that represents a fluctuation curve of the time series, or a specified value in the time series, for example, a maximum value, a minimum value, or an average value.

The extraction feature is a feature existing in a process of extracting the data in the time series. For example, the extraction feature includes a statistical feature, a fitting feature, or a frequency domain feature. Correspondingly, feature data of the extraction feature includes data of the statistical feature, data of the fitting feature, or data of the frequency domain feature. The statistical feature is a statistical feature of the time series. The statistical feature includes a quantity feature and an attribute feature. The quantity feature includes a metering feature and a counting feature. The quantity feature may be directly represented by using a value. For example, consumption values of a plurality of resources such as a CPU resource, a memory resource, and an IO resource are metering features. An anomaly quantity and a quantity of devices working normally are counting features. The attribute feature cannot be directly represented by using a value, for example, whether a device is abnormal or whether a device is shut down. A feature in the statistical feature is an indicator to which attention needs to be paid during statistics collection. For example, the data of the statistical feature includes a moving average value (Moving_average), a weighted average value (Weighted_mv), and the like. The fitting feature is a feature existing during fitting of the time series. In this case, the data of the fitting feature is used to reflect a feature that is of the time series and that is used for fitting. For example, the data of the fitting feature includes an algorithm used during fitting, such as ARIMA. The frequency domain feature is a feature of the time series in frequency domain. In this case, the frequency domain feature is used to reflect the feature of the time series in frequency domain. For example, the data of the frequency domain feature includes data of a rule to which frequency domain distribution of the time series complies, for example, a proportion of a high-frequency component in the time series. Optionally, the data of the frequency domain feature may be obtained by performing wavelet decomposition on the time series.

It is assumed that the feature data in the training sample is obtained from a first time series. In this case, the data obtaining process may include: determining a target feature that needs to be extracted, and extracting feature data of the determined target feature from the first time series, to obtain a training sample that includes the obtained data of the target feature. For example, the target feature that needs to be extracted is determined based on an application scenario of the model training method. In an optional example, the target feature is a preconfigured feature, for example, a feature configured by a user. In another optional example, the target feature is one or more of specified features, for example, the specified feature is the foregoing statistical feature.

It should be noted that the user may preset the specified feature. However, the first time series possibly cannot have all specified features. Therefore, the first analysis device may screen the first time series, to obtain a feature belonging to the specified features and use the feature as the target feature. For example, the target features includes one or more statistical features such as a time series decomposition_period component (time series decompose_seasonal, Tsd seasonal), a moving average value, a weighted average value, time series classification, a maximum value, a minimum value, a quantile, a variance, a standard deviation, period on period (year on year, yoy, which means a comparison with that in a historically same period), a daily fluctuation rate, binned entropy, sample entropy, a moving average, an exponential moving average, a Gaussian distribution feature, or a T distribution feature. Correspondingly, the data of the target feature includes data of the one or more statistical features; and/or

the target features includes one or more fitting features such as an autoregressive fitting error, a Gaussian process regression fitting error, or a neural network fitting error, and correspondingly, the data of the target feature includes data of the one or more fitting features; and/or

the target feature includes a frequency domain feature such as a proportion of a high-frequency component in a time series, correspondingly, the data of the target feature includes data of the proportion of the high-frequency component in the time series, and the data may be obtained by performing wavelet decomposition on the time series.

In Table 1, a sample in the historical training sample set is described by using an example. In Table 1, each training sample in the historical training sample set includes feature data of a KPI time series of one or more features, and each training sample corresponds to one KPI time series. In Table 1, a training sample whose identifier (identification, ID) is KPI_1 includes feature data of four features, and the feature data of the four features is respectively a moving average value (Moving_average), a weighted average value (Weighted_mv), a time series decomposition_period component (time series decompose_seasonal, Tsd_seasonal), and a period yoy. A KPI time series corresponding to the training sample is (x1, x2, ..., xn) (the time series is generally obtained by sampling data of a KPI category), and a corresponding label is "abnormal".

**Table 1**

| Sample data ID | Time sequence | Feature description 1 | Feature description 2 | Feature description 3 | Feature description 4 | Label description |
|---|---|---|---|---|---|---|
| KPI_1 | (x1, x2, ..., xn) | Moving_ average | Weighted_mv | Tsd_seasonal | Period yoy | Abnormal |

In a second optional manner, the training sample obtained by the first analysis device may include data that has a specified feature, and is obtained data. For example, the training sample includes KPI data. As described above, it is assumed that a KPI is a network KPI. In this case, each sample may include network KPI data of one or more network KPI categories, that is, a feature corresponding to a sample is a KPI category.

In Table 2, a sample in the historical training sample set is described by using an example. In Table 2, each training sample in the historical training sample set includes network KPI data of one or more features. In Table 2, the training samples correspond to a plurality of pieces of network KPI data obtained at a same collection moment. In Table 2, a training sample whose identifier (identification, ID) is KPI_2 includes feature data of four features, the feature data of the four features is respectively network traffic, CPU utilization, a packet loss rate, and a delay, and a corresponding label is "normal".

**Table 2**

| Sample data ID | Feature description 1 | Feature description 2 | Feature description 3 | Feature description 4 | Label description |
|---|---|---|---|---|---|
| KPI_2 | Network traffic | CPU utilization | Packet loss rate | Delay | Normal |

In the foregoing Table 1 and Table 2, feature data corresponding to each feature is generally value data, that is, each feature has a feature value. For ease of description, the feature value is not shown in Table 1 and Table 2. It is assumed that feature data in the historical training sample set is stored in a fixed format, and a feature corresponding to the feature data may be a preset feature. In this case, the feature data in the historical training sample set may be stored in a format in Table 1 or Table 2. In actual implementation of this embodiment of this application, the sample in the historical training sample set may be in another form. This is not limited in this embodiment of this application.

It should be noted that before performing offline training, the first analysis device may preprocess a sample in the training sample set obtained through collection, and then perform the foregoing offline training based on the training sample set obtained through preprocessing. The preprocessing process is used to process a collected sample to obtain a sample that meets a preset condition, and the preprocessing process may include one or more types of processing in sample deduplication, data cleansing, and data complement.

The offline training process described in step 401 is also referred to as a model learning process, and is a process in which the machine learning model learns a related classification function thereof. In an optional manner, the offline training process is a process of training an initial learning model to obtain the machine learning model. In another optional manner, the offline training process is a process of establishing the machine learning model, that is, the machine learning model obtained through offline training is an initial learning model. This is not limited in this embodiment of this application. After completing offline training, the first analysis device may further execute a model evaluation process on the machine learning model obtained through training, to evaluate whether the machine learning model meets a performance fulfillment condition. When the machine learning model meets the performance fulfillment condition, the following step 402 is performed. When the machine learning model does not meet the performance fulfillment condition, the machine learning model may be retrained at least once until the machine learning model meets the performance fulfillment condition, and then the following step 402 is performed.

In an example, the first analysis device may set a first performance fulfillment threshold based on a user requirement, and compare a parameter value of a positive performance parameter of the machine learning model on which training is completed with the first performance fulfillment threshold. When the value of the positive performance parameter is greater than the first performance fulfillment threshold, the first analysis device determines that the machine learning model meets the performance fulfillment condition. When the value of the positive performance parameter is not greater than the first performance fulfillment threshold, the first analysis device determines that the machine learning model does not meet the performance fulfillment condition. The positive performance parameter is positively correlated with performance of the machine learning model, that is, a larger parameter value of the positive performance parameter indicates better performance of the machine learning model. For example, the positive performance parameter is an indicator that represents model performance, for example, accuracy, recall, precision, or an f-score (f-score). For another example, the first performance fulfillment threshold is 90%. The accuracy is equal to a proportion of a quantity of times of correct prediction to a total quantity of times of prediction.

In another example, the first analysis device may set a first performance degradation threshold based on a user requirement, and compare a parameter value of a negative performance parameter of the machine learning model on which training is completed with the first performance degradation threshold. When the value of the negative performance parameter is greater than the first performance degradation threshold, the first analysis device determines that the machine learning model does not meet the performance fulfillment condition. When the value of the negative performance parameter is greater than the first performance degradation threshold, the first analysis device determines that the machine learning model meets the performance fulfillment condition. The negative performance parameter is negatively correlated with performance of the machine learning model, that is, a larger parameter value of the negative performance parameter indicates poorer performance of the machine learning model. For example, the negative performance parameter is a classification result error rate (also referred to as a false positive rate), and the first performance degradation threshold is 20%. The false positive rate is equal to a proportion of a quantity of times of incorrect prediction to a total quantity of times of prediction.

For example, a specified quantity of test samples are input into the machine learning model to obtain a specified quantity of classification results. The accuracy or the false positive rate is obtained through statistics collection based on the specified quantity of classification results. In the foregoing formula, the total quantity of times of prediction is the foregoing specified quantity. Whether a predicted classification result is correct or incorrect may be determined by operation and maintenance personnel based on expert experience.

For example, if the specified quantity is 100 times, and the quantity of times of incorrect prediction is 20, the false positive rate is 20/100=20%. If the first performance degradation threshold is 10%, the first analysis device determines that the machine learning model does not meet the performance fulfillment condition.

The foregoing retraining process may be an offline training process, or may be an online training process (for example, an incremental training process). A training sample used in the retraining process may be the same as or different from a training sample used in the previous training process. This is not limited in this embodiment of this application.

Step 402. The first analysis device sends the machine learning model to the plurality of local analysis devices.

The first analysis device may provide the machine learning model to the local analysis devices in different manners. In this embodiment of this application, the following two examples are used for description: In an optional example, after receiving a model obtaining request sent by the local analysis device, the first analysis device may send the machine learning model to the local analysis device, where the model obtaining request is used to request to obtain the machine learning model from the first analysis device. In another optional example, after obtaining the machine learning model through training, the first analysis device may actively push the machine learning model to the local analysis device.

For example, the first analysis device may include a model deployment module, and a communication connection is established between the model deployment module and each local analysis device. The first analysis device may deploy the machine learning model on each local analysis device by using the model deployment module.

Step 403. The local analysis device predicts a classification result by using the machine learning model.

As described above, different machine learning models may separately implement different functions. These functions are implemented by predicting the classification result. Classification results corresponding to different functions are different. After receiving the machine learning model sent by the first analysis device, the local analysis device may predict a classification result by using the machine learning model.

For example, if a classification result of online data of the local analysis device needs to be predicted, data whose classification result needs to be predicted may include a CPU KPI and/or a memory (memory) KPI.

It is assumed that anomaly detection needs to be performed on the online data of the local analysis device, that is, the predicted classification result indicates whether the data is abnormal. In this case, the local analysis device may periodically execute an anomaly detection process. After anomaly detection is performed on the online data, an anomaly detection result that is output by the machine learning model is shown in Table 3 and Table 4. Table 3 and Table 4 record anomaly detection results of to-be-detected data obtained at different collection moments (also referred to as data generation moments). The different collection moments include T1 to TN (N is an integer greater than 1), and the anomaly detection result indicates whether corresponding to-be-detected data is abnormal. The to-be-detected data in both Table 3 and Table 4 includes feature data in one dimension. Table 3 records an anomaly detection result of to-be-detected data whose feature category is the CPU KPI. Table 4 records an anomaly detection result of to-be-detected data whose feature category is the memory KPI. It is assumed that 0 represents "normal" and 1 represents "abnormal". Duration of an interval between every two collection moments in T1 to the TN is a preset time period. In this case, the collection moment T1 is used as an example. At the moment, the CPU KPI in Table 3 is 0, and the memory KPI in Table 4 is 1, indicating that the CPU KPI collected at the collection moment T1 is normal and the memory KPI collected at the collection moment T1 is abnormal.

Table 3

| Collection moment | CPU KPI |
|---|---|
| T1 | 0 |
| T2 | 0 |
| ... | ... |
| TN | 0 |

**Table 4**

| Collection moment | Memory KPI |
|---|---|
| T1 | 1 |
| T2 | 0 |
| ... | ... |
| TN | 1 |

Step 404. The local analysis device performs incremental training on the machine learning model based on a first training sample set.

There are a plurality of occasions in which the local analysis device obtains the first training sample set. For example, the local analysis device may periodically obtain the first training sample set. For another example, the local analysis device obtains the first training sample set after receiving a sample set obtaining instruction sent by operation and maintenance personnel of the local analysis device or after receiving a sample set obtaining instruction sent by the first analysis device or the foregoing management device, where the sample set obtaining instruction is used to instruct to obtain the first training sample set. For another example, when the machine learning model is degraded, the local analysis device obtains the first training sample set.

Generally, only when the machine learning model is degraded, the local analysis device performs incremental training on the machine learning model. In this way, training duration can be reduced, and a user service can be prevented from being affected. The incremental training trigger mechanism (namely, a detection mechanism for detecting whether the model is degraded) may include the following two cases:

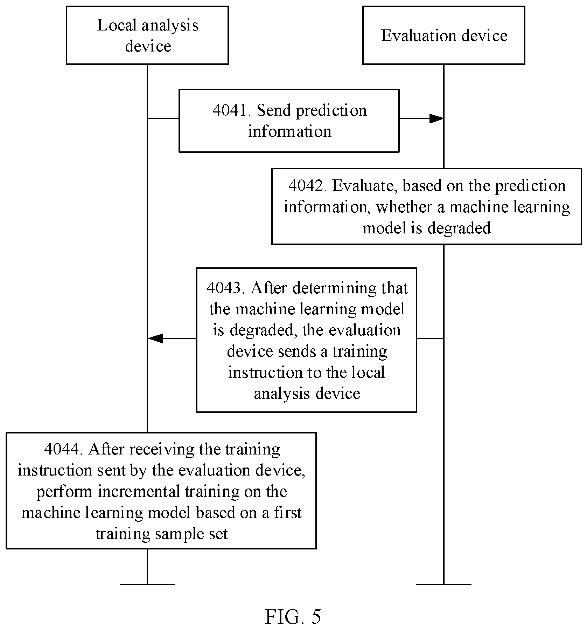

In a first case, as shown in FIG. 3, the application scenario of the model training method further includes an evaluation device. The evaluation device may control, based on an evaluation result of a classification result, the local analysis device to perform incremental training on the machine learning model. As shown in FIG. 5, the process includes the following steps.

Step 4041. The local analysis device sends prediction information to the evaluation device.

In an example, the local analysis device may send prediction information to the evaluation device after the local analysis device predicts a classification result by using the machine learning model each time, where the prediction information includes the predicted classification result. In another example, the local analysis device may periodically send prediction information to the evaluation device, where the prediction information includes a classification result obtained in a current period. In still another example, the local analysis device may send prediction information to the evaluation device after a quantity of obtained classification results reaches a quantity threshold, where the prediction information includes the obtained classification result. In yet another example, the local analysis device may send prediction information to the evaluation device within a specified time segment, where the prediction information includes a currently obtained classification result. For example, the time segment may be a time segment that is set by the user, or may be a time segment in which a user service occurrence frequency is lower than a specified frequency threshold, for example, 0:00 to 5:00. In this way, interference to the user service can be avoided.

It should be noted that in different application scenarios, the foregoing prediction information may further carry other information, so that the evaluation device effectively evaluates each classification result, to ensure evaluation accuracy.

For example, in a scenario in which a classification result of a KPI data sequence is predicted, the machine learning model is used to predict a classification result of to-be-predicted data including one or more pieces of KPI feature data. The KPI feature data is feature data of a KPI time series or is KPI data. Correspondingly, the prediction information further includes: an identifier of a device (namely, a device that generates KPI data corresponding to the to-be-predicted data, for example, a network device) to which the to-be-predicted data belongs, a KPI category corresponding to the to-be-predicted data, and a collection moment of the KPI data corresponding to the to-be-predicted data. Based on the information, a device, a KPI category, and a collection moment of KPI data that correspond to each classification result may be determined, to accurately determine whether KPI data collected at different collection moments is abnormal.

When the KPI feature data is feature data of a KPI time series, the KPI data corresponding to the to-be-predicted data is data in the KPI time series. In this case, the KPI category corresponding to the to-be-predicted data is a category of the KPI time series, and the collection moment is a collection moment of any data in the KPI time series, or may be a collection moment of data at a specified location, for example, a collection moment of the last data. For example, it is assumed that the KPI category of the KPI time series is a packet loss rate, and the time series is (x1, x2, ..., xn). In this case, it indicates that packet loss rates collected in a collection period are respectively x1, x2, ..., and xn. It is assumed that a structure of the to-be-predicted data is similar to that in Table 1, and the data is (1, 2, 3, 4). In this case, it indicates that a moving average value is 1, a weighted average value is 2, a time series decomposition_period component is 3, and a period yoy is 4. It is assumed that the collection moment of the KPI data corresponding to the to-be-predicted data is a collection moment of the last data in the KPI time series. In this case, the KPI category corresponding to the to-be-predicted data is a packet loss rate, and the collection moment of the KPI data corresponding to the to-be-predicted data is a collection moment of xn.

When the KPI feature data is KPI data, the KPI category corresponding to the to-be-predicted data is a KPI category of the KPI data, the KPI data corresponding to the to-be-predicted data is the KPI data, and the collection moment is a collection moment of the KPI data. For example, it is assumed that a structure of the to-be-predicted data is similar to that in Table 2, and the to-be-predicted data is (100, 20%, 3, 4). In this case, it indicates that network traffic is 100, CPU utilization is 20%, a packet loss rate is 3, and a delay is 4. In this case, the KPI category corresponding to the to-be-predicted data is the network traffic, the CPU utilization, the packet loss rate, and the delay, the collection moment of the KPI data corresponding to the to-be-predicted data is collection moments of (100, 20%, 3, 4), and the collection moments are generally a same collection moment.

After receiving the prediction information, the evaluation device may present at least the classification result and the to-be-predicted data in the prediction information, or may present all content in the prediction information, so that the operation and maintenance personnel determines, based on expert experience, whether the classification result is correct or incorrect.

Step 4042. The evaluation device evaluates, based on the prediction information, whether the machine learning model is degraded.

For example, when the received classification result reaches a specified quantity threshold, the evaluation device may evaluate, based on the prediction information, whether the machine learning model is degraded. Alternatively, the evaluation device may periodically evaluate, based on the prediction information, whether the machine learning model is degraded. Accordingly, an evaluation period may be one week, one month, or the like. In this embodiment of this application, a principle of the evaluation process is similar to that of the model evaluation process in the foregoing step 401.

In an example, the evaluation device may set a second performance fulfillment threshold based on a user requirement, and compare a parameter value of a positive performance parameter of the machine learning model on which training is completed with the second performance fulfillment threshold. When the value of the positive performance parameter is greater than the second performance fulfillment threshold, the evaluation device determines that the machine learning model is not degraded. When the value of the positive performance parameter is not greater than the second performance fulfillment threshold, the evaluation device determines that the machine learning model is degraded. The positive performance parameter is positively correlated with performance of the machine learning model, that is, a larger parameter value of the positive performance parameter indicates better performance of the machine learning model. For example, the positive performance parameter is an indicator that represents model performance, for example, accuracy, recall, precision, or an f-score (f-score), and the second performance fulfillment threshold is 90%. The second performance fulfillment threshold and the foregoing first performance fulfillment threshold may be the same or different. For a calculation manner of the accuracy, refer to the calculation manner of the accuracy provided in the model evaluation process in the foregoing step 401.

In another example, the evaluation device may set a second performance degradation threshold based on a user requirement, and compare a parameter value of a negative performance parameter of the machine learning model on which training is completed with the second performance degradation threshold. When the value of the negative performance parameter is greater than the second performance degradation threshold, the evaluation device determines that the machine learning model is degraded. When the value of the negative performance parameter is greater than the second performance degradation threshold, the evaluation device determines that the machine learning model is not degraded. The negative performance parameter is negatively correlated with performance of the machine learning model, that is, a larger parameter value of the negative performance parameter indicates poorer performance of the machine learning model. For example, the negative performance parameter is a classification result error rate (also referred to as a false positive rate), and the second performance degradation threshold is 20%. The second performance degradation threshold and the foregoing first performance degradation threshold may be the same or different. For a calculation manner of the false positive rate, refer to the calculation manner of the false positive rate provided in the model evaluation process in the foregoing step 401.

For example, the evaluation device obtains a plurality of classification results, and collects statistics about the accuracy or the false positive rate based on the plurality of obtained classification results. The total quantity of times of prediction in the accuracy or the false positive rate is a quantity of the obtained classification results. As described above, whether the predicted classification result is correct or incorrect may be determined by the operation and maintenance personnel of the evaluation device.

In the anomaly detection scenario, the false positive rate may be obtained in another manner. In the scenario, the local analysis device further establishes a communication connection to the management device. When the classification result that is output by the machine learning model on the local analysis device is "abnormal", the local analysis device sends alarm information to the management device. The alarm information is used to indicate that sample data is abnormal, and carries sample data whose classification result is "abnormal". The management device identifies the sample data and the classification result in the alarm information. If the classification result is incorrect, the management device updates the classification result (that is, updates the classification result from "abnormal" to "normal"). In this case, it indicates that the alarm information is false alarm information. A quantity of pieces of false alarm information is a quantity of times the predicted classification result is incorrect. The local analysis device or the management device may feed back the quantity of pieces of false alarm information in each evaluation period to the evaluation device, or report the false alarm information to the evaluation device, so that the evaluation device counts the quantity of pieces of false alarm information. Then, the false positive rate is calculated by using the foregoing calculation manner of the false positive rate and based on a quantity that is of classification results obtained in the evaluation period and that is counted by the evaluation device.

Step 4043. After determining that the machine learning model is degraded, the evaluation device sends a training instruction to the local analysis device.

The training instruction is used to instruct to train the machine learning model.

Optionally, after determining that the machine learning model is not degraded, the evaluation device does not perform an action.

Step 4044. After receiving the training instruction sent by the evaluation device, the local analysis device performs incremental training on the machine learning model based on the first training sample set.

In a second case, the local analysis device may evaluate, based on prediction information, whether the machine learning model is degraded. After the machine learning model is degraded, the local analysis device performs incremental training on the machine learning model based on the first training sample set. For the evaluation process, refer to the foregoing step 4042.

It should be noted that the local analysis device may perform incremental training by using another trigger mechanism. For example, when at least one of the following trigger conditions is met, incremental training is performed:

An incremental training period is reached, or a training instruction sent by the operation and maintenance personnel of the local analysis device is received, or a training instruction sent by the first analysis device is received. The training instruction is used to instruct to perform incremental training.

In this embodiment of this application, the first training sample set may include sample data that is directly extracted, based on a specified rule, by the local analysis device from data obtained by the local analysis device and that has a determined label. For example, the first training sample set may include time series data obtained by the local analysis device from the network device, or include feature data of a time series. In addition, a label of the first training sample set may be presented by the local analysis device, the management device, or the first analysis device to the operation and maintenance personnel, so that the operation and maintenance personnel performs labeling based on expert experience.

Referring to the foregoing step 401, the training sample may be in a plurality of forms. Correspondingly, the local analysis device may obtain the training sample in a plurality of manners. In this embodiment of this application, the following two optional manners are used as an example for description:

In a first optional manner, the training sample that is in the first training sample set and that is obtained by the local analysis device may include data determined based on a time series, for example, include data determined based on a KPI time series. Referring to the structure of the historical training sample set, generally, each training sample in the first training sample set corresponds to one time series, and each training sample may include feature data of one or more features extracted from the corresponding time series. A quantity of features corresponding to each training sample is the same as an amount of feature data in the training sample (that is, features are in a one-to-one correspondence with feature data). The feature in the training sample is a feature of a corresponding time series, and may include a data feature and/or an extraction feature.

In an optional example, the local analysis device may receive a time series sent by a network device (namely, a network device managed by the local analysis device) that is connected to the local analysis device and that is in a corresponding local network. In another optional example, the local analysis device has an input/output (I/O) interface, and receives a time series from a corresponding local network through the I/O interface. In still another optional example, the local analysis device may read a time series from a storage device corresponding to the local analysis device, and the storage device is used to store a time series that is obtained in advance by the local analysis device from a corresponding local network.

It is assumed that the feature data in the training sample is obtained from a second time series. In this case, for the data obtaining process, refer to the foregoing process of obtaining the training sample in the historical training sample set from the first time series, for example, determining a target feature that needs to be extracted, and extracting feature data of the determined target feature from the second time series, to obtain a first training sample that includes the obtained data of the target feature. Details are not described in this embodiment of this application.

In a second optional manner, the training sample obtained by the local analysis device may include data that has a specified feature, and is obtained data. For example, the training sample includes KPI data. As described above, it is assumed that a KPI is a network KPI. In this case, each sample may include network KPI data of one or more network KPI categories, that is, a feature corresponding to a sample is a KPI category.

For the process in which the local analysis device obtains the training sample, refer to the process in which the first analysis device obtains the training sample in the foregoing step 401. For a structure of the obtained training sample in the first training sample set, refer to the structure of the training sample in the historical training sample set. Details are not described again in this embodiment of this application.

Generally, when incremental training is performed on the machine learning model, sample data whose collection moment is closest to a current moment has a greater impact on the machine learning model. In this case, if quality of sample data in the first training sample set used to perform incremental training on the machine learning model is poor, the machine learning model finally obtained through training may overwrite a machine learning model that has good performance and that is previously obtained through training. Consequently, a performance deviation of the machine learning model is caused.

Therefore, the local analysis device may screen sample data obtained by the local analysis device, to select sample data having good quality as the training sample, and provide the training sample for the operation and maintenance personnel to perform labeling, to obtain sample data having a label. Therefore, performance of the machine learning model obtained through training is improved. In this application, the screening function is referred to as an active learning function.

The machine learning model predicts a classification result based on a probability theory, that is, obtains, through prediction, probabilities of a plurality of classification results, and uses a classification result with a highest probability as a final classification result. For example, a machine learning model based on a binary classification principle is used to select a classification result (for example, 0 or 1) with a high probability as a final classification result for output. Binary classification means that the machine learning model has two classification results.

An example in which anomaly detection is performed on a CPU KPI of online data (that is, a type of sample data that is input into the machine learning model is the CPU KPI) is used. Table 5 records probabilities of different classification results of CPU KPIs obtained at different collection moments. The different collection moments include T1 to TN (N is a positive integer greater than 1). The different classification results include two results: "normal" and "abnormal", where 0_prob represents a probability of a prediction result "normal", and 1_prob represents a probability of a prediction result "abnormal". In this case, at the collection moment T1, 1_prob is 0.51, 0_prob is 0.49, and 1_prob is greater than 0_prob. Therefore, the machine learning model determines that a final classification result of a CPU KPI collected at the collection moment T1 is 1, that is, the CPU KPI collected at the moment T1 is abnormal

**Table 5**

| Collection moment | 1_prob | 0_prob | Classification result |
|---|---|---|---|
| T1 | 0.49 | 0.51 | 0 |
| T2 | 0.9 | 0.1 | 1 |
| ... | ... | ... | ... |
| TN | 0.51 | 0.49 | 1 |

However, if top two probabilities in probabilities that are of a plurality of classification results and that are obtained through prediction are close to each other, although a classification result finally determined by using the machine learning model is a classification result with a highest probability, a difference between the classification result and a classification result with a second-highest probability is very small, and consequently the classification result finally determined by using the machine learning model has poor reliability. However, in actual application of this embodiment of this application, when a difference between the probabilities that are of the plurality of classification results and that are obtained through prediction is large, the classification result finally determined by using the machine learning model has higher reliability.

Table 5 is still used as an example. A difference between a probability that is obtained through prediction by using the machine learning model and that the CPU KPI obtained at the collection moment T1 is 0 and a probability that is obtained through prediction by using the machine learning model and that the CPU KPI obtained at the collection moment T1 is 1 is only 0.02, and the two probabilities are very close to each other. It may indicate that a prediction result that is of the sample data obtained at the collection moment T1 and that is output by the machine learning model is unreliable. A difference between a probability that is obtained through prediction by using the machine learning model and that the CPU KPI obtained at the collection moment T2 is 0 and a probability that is obtained through prediction by using the machine learning model and that the CPU KPI obtained at the collection moment T2 is 1 is very large. It may indicate that a prediction result that is of the sample data obtained at the collection moment T2 and that is output by the machine learning model is reliable.

It may be learned from the foregoing descriptions that, when a difference between probabilities that are of a plurality of classification results and that are obtained by predicting a sample by using the machine learning model is large, that is, there is very large probability discrimination, the machine learning model can already determine an accurate classification result, and the sample no longer needs to be trained. However, if there is small probability discrimination, the machine learning model cannot determine an accurate classification result, and a label of the sample may be determined manually or through label transfer, to give an accurate classification result (which may also be considered as an ideal classification result). The sample having a determined label is used as a training sample for training, so that reliability of a classification result that is of the sample and that is output by the machine learning model for can be improved.

For example, in this embodiment of this application, a low discrimination condition is used to screen the first training sample set, that is, the first training sample set includes a sample that is obtained by screening a sample obtained by the local analysis device and that meets the low discrimination condition, and the low discrimination condition includes at least one of the following:

Condition 1. An absolute value of a difference between any two probabilities in a target probability set obtained by predicting a sample by using the machine learning model is less than a first difference threshold, where the target probability set includes probabilities of first n classification results arranged in descending order of probabilities, $1 < n < m$, and m is a total quantity of probabilities obtained by predicting the sample by using the machine learning model. Under the condition, a sample having n classification results with insufficient discrimination may be obtained through screening.

Condition 2. An absolute value of a difference between any two probabilities in a target probability set obtained by predicting a sample by using the machine learning model is less than a first difference threshold, where the target probability set includes probabilities of first n classification results arranged in descending order of probabilities, and n is an integer greater than 1. Under the condition, a sample having classification results with insufficient discrimination may be obtained through screening.

Condition 3. An absolute value of a difference between a highest probability and a lowest probability in probabilities that are of a plurality of classification results and that are obtained by predicting a sample by using the machine learning model is less than a third difference threshold. Under the condition, a sample having a plurality of classification results with insufficient discrimination may be obtained through screening.

Condition 4. An absolute value of a difference between any two probabilities in probabilities that are of a plurality of classification results and that are obtained by predicting a sample by using the machine learning model is less than a fourth difference threshold. Under the condition, a sample having a plurality of classification results with insufficient discrimination may be obtained through screening.

Condition 5. Probability distribution entropy E that is of a plurality of classification results and that is obtained by predicting a sample by using the machine learning model is greater than a specified distribution entropy threshold, and E meets:

$$E = -\sum_{i} P(\mathrm{x}_i) \log_b P(\mathrm{x}_i)$$

(Formula 1),

where

$x_i$ represents an $i^{th}$ classification result, $P(x_i)$ represents a probability that is of the $i^{th}$ classification result of the sample and that is obtained through prediction, b is a specified base, for example, 2 or a constant e, $0 \leq P(x_i) \leq 1$, and $\sum$ represents summation.

It is assumed that a first sample is any to-be-predicted sample obtained by the local analysis device. In this case, for the foregoing Condition 1, the machine learning model may be first used to predict the first sample to obtain probabilities of a plurality of classification results, and values of the probabilities range from 0 to 1. The probabilities of the plurality of classification results are sorted in descending order of the probabilities, and probabilities of first n classification results are obtained by screening the sorted probabilities, to obtain a target probability set. An absolute value of a difference between every two probabilities in the target probability set is calculated, and the calculated absolute value of the difference is compared with the first difference threshold. When an absolute value of a difference between any two probabilities is less than the first difference threshold, the first sample is determined as a sample that meets the low discrimination condition.

For example, n=2, the first difference threshold is 0.3, the machine learning model is used to predict a sample X to obtain probabilities of three classification results (that is, m=3), and the probabilities are respectively 0.32, 0.33, and 0.35. In this case, the target probability set includes 0.33 and 0.35. An absolute value of a difference between the two probabilities is less than the first difference threshold. In this case, the sample X is a sample that meets the low discrimination condition.

For the foregoing Condition 2, the machine learning model may be first used to predict the first sample to obtain probabilities of a plurality of classification results, and values of the probabilities range from 0 to 1. Then, an absolute value of a difference between every two probabilities is calculated, and the calculated absolute value of the difference is compared with the second difference threshold. When an absolute value of a difference between any two probabilities is less than the second difference threshold, the first sample is determined as a sample that meets the low discrimination condition.

For example, in a binary classification scenario, if an absolute value of a difference between a first probability and a second probability that correspond to the first sample is less than the second difference threshold, the first sample meets the low discrimination condition. The first probability is a probability that is obtained through prediction by using a first tree model and that a classification result of the first sample is a first classification result, and the second probability is a probability that is obtained through prediction by using the first tree model and that the classification result of the first sample is a second classification result. Still referring to Table 5, it is assumed that the first sample is the CPU KPI obtained at the collection moment TN, and the second difference threshold is 0.1. A probability that is obtained through prediction by using the machine learning model and that the CPU KPI obtained at the collection moment TN is 0 and a probability that is obtained through prediction by using the machine learning model and that the CPU KPI obtained at the collection moment TN is 1 are respectively 0.51 and 0.49. In other words, the first probability and the second probability are respectively 0.51 and 0.49, a difference between the two possibilities is only 0.02, and an absolute value of the difference between the two possibilities is less than 0.1. It may be determined that the first sample meets the low discrimination condition.

For the foregoing Condition 3, the machine learning model may be first used to predict the first sample to obtain probabilities of a plurality of classification results. A highest probability and a lowest probability are obtained by screening the probabilities of the plurality of classification results, an absolute value of a difference between the two probabilities is calculated, and the calculated absolute value of the difference is compared with the third difference threshold. When the absolute value of the difference is less than the third difference threshold, the first sample is determined as a sample that meets the low discrimination condition.

For example, the third difference threshold is 0.2, the machine learning model is used to predict a sample Y to obtain probabilities of three classification results, and the probabilities are respectively 0.33, 0.33, and 0.34. In this case, the highest probability and the lowest probability are respectively 0.34 and 0.33. The absolute value of the difference between the two probabilities is less than the third difference threshold. In this case, the sample Y is a sample that meets the low discrimination condition.

For the foregoing Condition 4, the machine learning model may be first used to predict the first sample to obtain probabilities of a plurality of classification results. An absolute value of a difference between every two probabilities in the probabilities of the plurality of classification results is calculated, and the calculated absolute value of the difference is compared with the fourth difference threshold. When an absolute value of a difference between any two probabilities is less than the fourth difference threshold, the first sample is determined as a sample that meets the low discrimination condition.

For example, the fourth difference threshold is 0.2, the machine learning model is used to predict a sample Z to obtain probabilities of three classification results, and the probabilities are respectively 0.33, 0.33, and 0.34. An absolute value of a difference between any two probabilities is less than 0.2. In this case, the sample Z is a sample that meets the low discrimination condition.

For the foregoing Condition 5, probability distribution is a description of a random variable. Different random variables have same or different probability distribution. Probability distribution entropy is a description of different probability distribution. In this embodiment of this application, the probability distribution entropy is positively correlated with probability uncertainty, and larger probability distribution entropy indicates greater probability uncertainty. For example, if probabilities that are of two classification results and that are obtained by predicting a sample by using a binary-classification machine learning model are both 50%, the probability distribution entropy is a maximum value. However, an actual classification result with a reliable probability cannot be finally selected as a final classification result.

Therefore, it may be learned that, when the probability distribution entropy E reaches a degree, for example, the specified distribution entropy threshold, probabilities cannot be effectively discriminated from each other. Therefore, the formula may be used to effectively obtain a probability with low discrimination through screening.

When the foregoing machine learning model is a binary classification model, the foregoing Formula 1 may be as follows:

$$E = -P(x_1)\log_b P(x_1) + P(x_2)\log_b P(x_2) \quad \text{(Formula 2)},$$

where

$x_1$ represents a first classification result, and $x_2$ represents a second classification result. For example, in the anomaly detection scenario, $x_1$ represents a classification result "normal", and $x_2$ represents a classification result "abnormal". For a meaning of another parameter, refer to the foregoing Formula 1.

Step 405. When performance of the machine learning model obtained through incremental training does not meet a performance fulfillment condition, the local analysis device triggers the first analysis device to retrain the machine learning model.

Performance of the machine learning model obtained through incremental training may be poor due to poor quality of a training sample or another reason. In this case, the first analysis device still needs to retrain the machine learning model. Generally, the first analysis device is an analysis device that supports offline training. A data amount of a training sample set obtained by the first analysis device is far greater than a data amount of the first training sample set of the local analysis device. Duration in which the first analysis device may perform training is also far greater than allowed training duration of the local analysis device. Operation performance of the first analysis device is also higher than operation performance of the local analysis device. Therefore, when performance of the machine learning model obtained through incremental training does not meet the performance fulfillment condition, the first analysis device retrains the machine learning model, so that a machine learning model with good performance can be obtained through training.

An action of evaluating whether performance of the machine learning model obtained through incremental training meets the performance fulfillment condition may be performed by the first analysis device. For the process, refer to the process of evaluating whether the machine learning model meets the performance fulfillment condition in the foregoing step 401. If the machine learning model meets the performance fulfillment condition, it indicates that the machine learning model is not degraded. If the machine learning model does not meet the performance fulfillment condition, it indicates that the machine learning model is degraded. The action of evaluating whether performance of the machine learning model obtained through incremental training meets the performance fulfillment condition may be performed by the evaluation device or the local analysis device in addition to the first analysis device. For the process, refer to the process of detecting whether the machine learning model is degraded in the foregoing step 404. When the action of evaluating whether performance of the machine learning model obtained through incremental training meets the performance fulfillment condition is performed by a device (for example, the first analysis device or the evaluation device) other than the local analysis device, after the another device completes the evaluation action, the another device needs to send an evaluation result to the local analysis device, so that the local analysis device determines whether performance of the machine learning model obtained through incremental training meets the performance fulfillment condition. Details are not described again in this embodiment of this application.

For example, the process in which the local analysis device triggers the first analysis device to retrain the machine learning model may include: The local analysis device sends a retraining request to the first analysis device, where the retraining request is used to request the first analysis device to retrain the machine learning model. After receiving the retraining request, the first analysis device retrains the machine learning model based on the retraining request. In this case, the local analysis device may also send a training sample set obtained from the corresponding local network, so that the first analysis device retrains the machine learning model based on the training sample set. The training sample set may be carried in the foregoing retraining request, or may be sent to the first analysis device by using independent information. This is not limited in this embodiment of this application. Correspondingly, the retraining process of the first analysis device may include the following two optional manners:

In a first optional manner, after receiving the retraining request sent by the local analysis device, the first analysis device may retrain the machine learning model based on the training sample set sent by the local analysis device that sends the retraining request.

The training sample set sent by the local analysis device is a training sample set obtained from the local network corresponding to the local analysis device, and includes at least the foregoing first training sample set. In this way, a training sample set that includes feature data obtained by the local analysis device is used to perform retraining, so that the machine learning model obtained through training can be better adapted to the requirement of the local analysis device, to implement model customization, and improve model application flexibility.

In a second optional manner, the first analysis device receives the retraining request sent by the local analysis device, and retrains the machine learning model based on the training sample set sent by the local analysis device that sends the retraining request and a training sample set sent by another local analysis device.

The training sample set used for retraining includes the training sample set obtained by the foregoing local analysis device from the corresponding local network, and also includes the training sample set obtained by the another local analysis device from a corresponding local network. Therefore, the training sample set used for retraining has a wider sample source and a more diversified data type, and the machine learning model obtained through retraining can be better adapted to requirements of a plurality of local analysis devices, to improve universality of the model obtained through offline training, implement model generalization, and reduce an overall training cost of the first analysis device.

It should be noted that, in addition to the foregoing two optional manners, the local analysis device may not send the retraining request, and sends only the training sample set obtained from the corresponding local network. Correspondingly, the first analysis device may perform retraining in the following third optional manner:

In the third optional manner, the first analysis device receives training sample sets sent by at least two of the local analysis devices, and retrains the machine learning model based on the received training sample sets.

For example, the first analysis device may retrain the machine learning model after training sample sets sent by a specified quantity of local analysis devices (for example, all local analysis devices that establish a communication connection to the first analysis device) are received or when a training period is reached or when a sufficient quantity of training samples are obtained (that is, a quantity of obtained training samples is greater than a training data amount threshold).

In the foregoing three optional manners, there may be another occasion in which the local analysis device sends, to the first analysis device, the training sample set (for example, the first training sample set) obtained from the corresponding local network. For example, the local analysis device may periodically upload the obtained training sample set. Alternatively, the local analysis device may upload the training sample set after receiving a sample set upload instruction sent by the operation and maintenance personnel or after receiving a sample set upload instruction sent by the first analysis device. The sample set upload instruction is used to instruct to upload the obtained training sample set to the first analysis device. The first analysis device may retrain the machine learning model based on the training sample set obtained through collection. The retraining process may be an offline training process, or may be an incremental training process. A training sample used in the retraining process may be the same as or different from a training sample used in the previous training process. This is not limited in this embodiment of this application.

It should be noted that, in this embodiment of this application, steps 401 and 404 may be periodically performed, that is, periodic offline training or incremental training is supported in the application scenario. After it is determined, through evaluation, that performance of the machine learning model of the first analysis device meets the performance fulfillment condition, the machine learning model may be sent to at least one local analysis device in the manner in step 402. For example, the machine learning model is sent only to a local analysis device that sends the foregoing retraining request to the first analysis device, or is sent to a local analysis device that provides a training sample set used for retraining, or is sent to all or specified local analysis devices that establish a communication connection to the first analysis device. For a local analysis device that receives the machine learning model obtained through retraining, if a machine learning model obtained by the local analysis device through training also meets the performance fulfillment condition, the local analysis device may obtain a target machine learning model by screening obtained machine learning models, to select a good machine learning model (for example, a machine learning model with a highest performance indicator) to predict a classification result. Generally, the local analysis device selects a newest machine learning model as the target machine learning model to be adapted to a classification requirement in a current application scenario.

As described above, the machine learning model may be a plurality of types of models. A tree model is a common machine learning model. The tree model includes a plurality of associated nodes (node). For ease of understanding by a reader, the tree model is briefly described in this embodiment of this application. In the tree model, each node includes a node element and several branches pointing to a subtree. A subtree on the left of a node is referred to as a left subtree (left subtree) of the node, and a subtree on the right of the node is referred to as a right subtree (right subtree). A root of a subtree of a node is referred to as a child node (child node) of the node, and the child node is also referred to as a child node. If a node is a child node of another node, the another node is a parent node (also referred to as a parent node) of the node. A depth or a level of a node is a quantity of edges on a longest simple path from a root node to the node, for example, a depth (also referred to as a height or a level) of the root node is 1, a depth of a child node of the root node is 2, and by analogy. A leaf node is also referred to as a terminal node, and is a node whose node degree is 0. The node degree is a quantity of subtrees of a node. A non-leaf node is a node other than the leaf node, and includes a root node and a node between the root node and the leaf node. A binary tree is a tree structure in which each node has a maximum of two subtrees, and is a common tree structure. In this embodiment of this application, the machine learning model may be a binary tree model, for example, an isolation forest model.

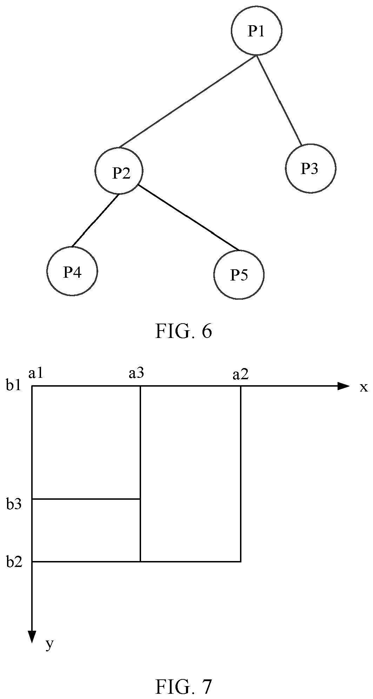

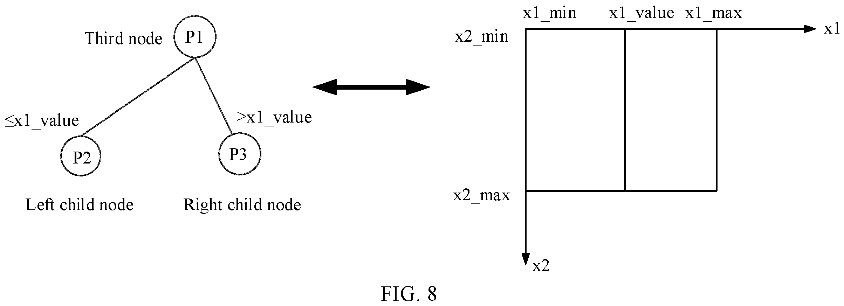

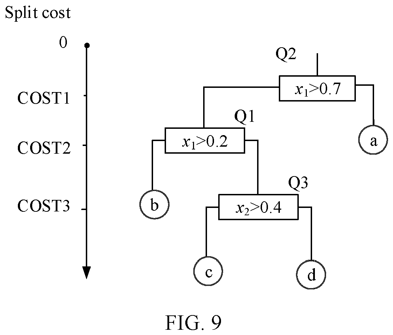

FIG. 6 is a schematic tree structure according to an embodiment of this application. The tree structure includes nodes P1 to P5. P1 is a root node, P3, P4, and P5 are leaf nodes, P1 and P2 are non-leaf nodes, and a depth of the tree is 2. The machine learning model is formed by performing node split on the nodes P1 and P3 two times. Node split means that a training sample set corresponding to a node is divided into a maximum of two subsets at a split point in a split dimension, and may be considered as that the node is split to obtain a maximum of two child nodes, and each child node corresponds to one subset. That is, a manner of allocating a training sample set corresponding to a node to a child node is referred to as split. In actual application of this embodiment of this application, the tree structure may be represented in a plurality of manners. FIG. 6 shows only a schematic tree structure, and there may be another representation manner such as FIG. 8 or FIG. 9. The representation manner of the tree structure is not limited in this application.

Currently, when the machine learning model is trained by using a training sample set, feature data that is in all feature dimensions and that is in the training sample set needs to be traversed, then a split parameter such as a split dimension and a split point of a non-leaf node in the machine learning model is determined, and the machine learning model is obtained through training based on the determined split parameter of the non-leaf node.

Feature data in a training sample needs to be traversed when the machine learning model is trained, and generally, the training sample has a very large amount of data. Consequently, training efficiency of the machine learning model is low.

In this embodiment of this application, when the machine learning model is a tree model, training efficiency of the machine learning model can be further improved while incremental training on the machine learning model is supported. In a subsequent embodiment, an example in which the machine learning model is a tree model is used to explain the foregoing steps. An offline training or incremental training process of the tree model relates to split of the tree model. A main principle thereof is to split (split) a space (also referred to as a sample space) corresponding to one or more samples. As mentioned above, each training sample includes feature data of one or more features. In the tree model, a feature (namely, a feature category) corresponding to a training sample is a dimension in which feature data of a space corresponding to the training sample is located. Therefore, in the tree model, considering a space concept, a feature corresponding to a training sample is also referred to as a feature dimension. In this embodiment of this application, that a training sample includes feature data in one or more dimensions means that the training sample includes feature data in one or more feature dimensions. For example, "a training sample includes feature data of a two-dimensional feature" is also referred to as "the training sample includes feature data in two feature dimensions". A space corresponding to the training sample is a two-dimensional space (namely, a plane). For another example, a training sample in Table 1 includes feature data in four feature dimensions, and a space corresponding to the training sample is a four-dimensional space.

FIG. 7 is a schematic diagram of a split principle of a tree model according to an embodiment of this application. The tree model is split based on a Mondrian process (Mondrian process). A data space (data space) is split by using a random hyperplane. Two subspaces may be generated through one time of split. Then, a random hyperplane continues to be used to split each subspace. The process is repeated until there is only one sample point in each subspace. In this way, a cluster with a high density may be split many times before split is stopped, points with a low density are very easily and early stopped in a subspace, and the subspace corresponds to a leaf node of the tree. In FIG. 7, it is assumed that a sample in a training sample set corresponding to the machine learning model in FIG. 6 includes feature data in two dimensions, that is, includes feature data in two feature dimensions. The feature dimensions are respectively a feature dimension x and a feature dimension y, and the training sample set includes samples (a1, b1), (a1, b2), and (a2, b1). In the first time of node split, a split dimension is the feature dimension x, a split point is a3, a sample space in which the training sample set is located is split into two subspaces, and the node split corresponds to a left subtree and a right subtree of the node P1 in FIG. 6. In the second time of node split, a split dimension is the feature dimension y, a split point is b3, and the node split corresponds to a left subtree and a right subtree of the node P2 in FIG. 6. Therefore, it may be learned that the sample set {(a1, b1), (a1, b2), (a2, b1)} is separately allocated to three subspaces. When the foregoing feature data is feature data of a time series, the feature dimension x and the feature dimension y may be respectively any two feature dimensions in the data feature and/or the extraction feature (for a specific feature, refer to the foregoing embodiment). For example, the feature dimension x is the period duration in the data arrangement period, and the feature dimension y is the moving average value in the statistical feature. In this case, the feature data (a1, b1) indicates that the period duration is a1 and the moving average value is b1. When the foregoing feature data is data that has a specified feature, for example, network KPI data, the feature dimension x and the feature dimension y may be any two KPI categories in the foregoing KPI categories (for a specific feature, refer to the foregoing embodiment). For example, if the feature dimension x is the network traffic, and the feature dimension y is the CPU utilization, the feature data (a1, b1) indicates that the network traffic is a1 and the CPU utilization is b1.

It should be noted that because the feature data is value data, each feature data has a corresponding value. In this embodiment of this application, a value of the feature data is referred to as a feature value in the following descriptions.

In this embodiment of this application, each node in the machine learning model may correspondingly store node information. In this way, when the machine learning model is subsequently retrained, based on the node information, node split may be performed, and a classification result of a leaf node may be determined. For example, node information of any node in the machine learning model includes label distribution information. The label distribution information is used to reflect proportions of labels of different categories, of a sample in a historical training sample set allocated to the corresponding node, to a total label quantity. The total label quantity is a total quantity of labels corresponding to the sample in the historical training sample set allocated to the any node. Node information of any non-leaf node further includes historical split information. The historical split information is information used to split the corresponding node. It should be noted that, because a leaf node in the machine learning model is a node that is currently not split, and the leaf node has no subtree, historical split information of the leaf node is empty. In the retraining process, if the leaf node is split, the leaf node becomes a non-leaf node, and historical split information needs to be added to the leaf node.

For example, the historical split information includes one or more of location information of the corresponding node in the machine learning model, a split dimension of the corresponding node, a split point of the corresponding node, a value distribution range of a historical training sample set allocated to the corresponding node, and a historical split cost of the corresponding node. The location information of the corresponding node in the machine learning model is used to uniquely position the node in the machine learning model. For example, the information includes a level of the node, an identifier of the node, and/or a branch relationship of the node. The identifier of the node is used to uniquely identify the node in the machine learning model, and may be allocated to the node when the node is generated. The identifier may include a digit and/or a character. When any node has a parent node, a branch relationship of the any node includes an identifier of the parent node of the any node and a description of the relationship with the parent node. For example, a branch relationship of the node P2 in FIG. 6 includes (node P1: parent node). When any node has a child node, a branch relationship of the any node includes an identifier of the child node of the any node and a description of the relationship with the child node. For example, the branch relationship of the node P2 in FIG. 6 further includes: (node P4: left child node, node P5: right child node). A split dimension of any node is a feature dimension in which a historical sample data set allocated to the any node is split, and a split point is a value point used for split. For example, in FIG. 6, a split dimension of the node P1 is x, and a split point thereof is a3. A split dimension of the node P2 is y, and a split point thereof is b3. Each non-leaf node has only one split dimension and only one split point. The value distribution range of the historical training sample set allocated to the corresponding node is a distribution range of feature values in the historical training sample set corresponding to the node. For example, in FIG. 1, a value distribution range of the node P3 is [a3, a2], or may be represented as a3-a2. The historical split cost is a split cost determined by the corresponding node based on the value distribution range of the historical training sample set. For specific explanations, refer to the following descriptions.

The label distribution information includes the total label quantity and a quantity of labels of a same category of the sample in the historical training sample set allocated to the corresponding node; or the proportions of the labels of different categories, of the sample in the historical training sample set allocated to the corresponding node, to the total label quantity. The total label quantity is the total quantity of labels corresponding to the sample in the historical training sample set allocated to the any node, and a ratio of the quantity of labels of a same category, of the sample in the historical training sample set, to the total label quantity is a proportion of the label of the category to the total label quantity. For example, in the anomaly detection scenario, a sample allocated to the node P1 has 10 labels, where there are two labels "normal" 0, and eight labels abnormal "1". In this case, the label distribution information includes: the label 0: 2, the label 1: 8, and the total label quantity: 10 (the proportions of the labels of different categories, of the sample in the historical training sample set allocated to the corresponding node, to the total label quantity may be determined based on the information). Alternatively, the label distribution information includes: the label 0: 20%, and the label 1: 80%. It should be noted that only an example of a representation manner of the label distribution information is described herein. In actual implementation, the representation manner of the label distribution information may be another manner. This is not limited in this embodiment of this application.

Further, node information of a leaf node may further include a classification result, namely, a label that corresponds to the leaf node and that is finally determined. For example, node information of the nodes P4 and P5 in FIG. 6 may include a classification result.

Node information is stored for each node, so that complete training information can be provided for subsequent model training. This reduces complexity of obtaining related information during model training, and improves model training efficiency.

Particularly, when the node information includes the value distribution range of the historical training sample set, in the subsequent retraining process, the model can be effectively retrained only based on the value distribution range of the historical training sample set, and there is no need to obtain an actual value of the feature data in the historical training sample set. This effectively reduces training complexity.

It is assumed that the machine learning model is a binary tree model, and the offline training process is a process of establishing the machine learning model. In this case, the process of training the machine learning model in the foregoing step 401 includes:

Step A1. Obtain a historical training sample set having a determined label.

In one case, a sample in the historical training sample set may not be labeled when the first analysis device obtains the sample. In this case, the first analysis device may present the sample to the operation and maintenance personnel, so that the operation and maintenance personnel performs labeling. In another case, labeling of a sample in the historical training sample set is completed when the first analysis device obtains the sample. For example, the first analysis device obtains the sample from the foregoing storage device, and the first analysis device directly performs model training by using the training sample set.

Step A2. Create a root node.

Step A3. Use the root node as a third node, and execute an offline training process until a split stop condition is met, where the offline training process includes:

Step A31. Split the third node to obtain a left child node and a right child node of the third node.

Step A32. Use the left child node as an updated third node, use, as an updated historical training sample set, a left sample set that is in the historical training sample set and that is allocated to the left child node, and execute the offline training process again.

Step A33. Use the right child node as the updated third node, use, as the updated historical training sample set, a right sample set that is in the historical training sample set and that is allocated to the right child node, and execute the offline training process again.

Step A4. Determine a classification result for each leaf node to obtain the machine learning model.

In this embodiment of this application, when the third node in the foregoing step meets the split stop condition, the third node has no child node. Therefore, the third node may be used as a leaf node. When a node is a leaf node, a classification result of the node may be determined based on a quantity of labels of a same category of a sample in a historical training sample set allocated to the node and a total label quantity of the historical training sample set allocated to the node; or a classification result of the leaf node may be determined based on proportions of labels of different categories, of a sample in a historical training sample set, to a total label quantity. A manner of determining the classification result is still based on the foregoing probability theory principle, that is, a label corresponding to a highest proportion or a largest quantity is used as a final classification result. A proportion of any label to the total label quantity is a ratio of a total quantity corresponding to the any label to the total label quantity. For example, on a leaf node, if a quantity of labels "abnormal" is 7, and a quantity of labels "normal" is 3, a proportion of the label "abnormal" to a total label quantity is 70%, a proportion of the label "normal" to the total label quantity is 30%, and a final classification result is "abnormal". The classification result is stored in node information of the leaf node.

In a conventional iForest model, a corresponding classification result is obtained through calculation by using an average value of heights of the leaf node on all trees. In this embodiment of this application, the classification result of the leaf node is obtained by using the label corresponding to the highest proportion or the largest quantity as the final classification result, so that the classification result is accurate, and an operation cost is small.

In the foregoing step A31, the third node may be split based on a value distribution range of the historical training sample set to obtain the left child node and the right child node of the third node. The value distribution range of the historical training sample set reflects a density of samples in the historical training sample set. When the samples are distributed in a scattered manner, the value distribution range is large. When the samples are distributed in a concentrated manner, the value distribution range is small.

In this embodiment of this application, the sample in the historical training sample set may include feature data in at least one dimension, and the value distribution range of the historical training sample set is a distribution range of feature values in the historical training sample set, that is, the value distribution range of the historical training sample set may be represented by using a minimum value and a maximum value in feature values in each feature dimension. In this embodiment of this application, feature data included in the sample in the historical training sample set is value data such as a decimal value, a binary value, or a vector. For example, the sample in the historical training sample set includes feature data in one dimension, and feature values included in the historical training sample set are 1, 3, ..., 7, and 10, where a minimum value is 1, and a maximum value is 7. In this case, the value distribution range of the historical training sample set is [1, 10], or may be represented as 1-10.

The feature data included in the sample in the historical training sample set may be originally value data, or may be obtained by converting non-value data by using a specified algorithm. For example, the feature dimension is data that cannot be initially represented by using a value, for example, a data change trend, data fluctuation, a statistical feature, or a fitting feature, and may be converted by using a specified algorithm, to obtain value data. For example, feature data "high" may be converted into value data "2"; feature data "intermediate" may be converted into value data "1"; and feature data "low" may be converted into value data "0". Node split is performed by using the historical training sample set that includes value data, so that calculation complexity can be reduced, and operation efficiency can be improved.

For example, the process of splitting the third node based on a value distribution range of the historical training sample set to obtain the left child node and the right child node of the third node may include:

Step A311. Determine a third split dimension from all feature dimensions of the historical training sample set.

In a first optional implementation, the third split dimension is a feature dimension randomly selected from all the feature dimensions of the historical training sample set.

In a second optional implementation, the third split dimension is a feature dimension that corresponds to a largest span and that is in all the feature dimensions of the historical training sample set. For example, a span of feature values in each feature dimension is a difference between a maximum value and a minimum value in the feature values in the feature dimension.

For example, all the feature dimensions of the historical training sample set may be sorted in descending order of spans, and then a feature dimension corresponding to a span ranked first is selected as the third split dimension.

A feature dimension corresponding to a large span corresponds to a high probability that split can be performed. Node split performed in the feature dimension can accelerate a model convergence speed and avoid ineffective split in the feature dimension. Therefore, the feature dimension corresponding to the largest span is selected as the third split dimension, so that a probability of effective split of the machine learning model can be improved, and node split overheads can be reduced.

As shown in FIG. 8, in this embodiment of this application, it is assumed that the sample in the historical training sample set includes feature data in two dimensions, and corresponds to a two-dimensional space. There are two feature dimensions x1 and x2, and span ranges of feature values in all the feature dimensions are respectively [x1_min, x1_max] and [x2_min, x2_max]. Corresponding spans are x1_max-x1_min and x2_max-x2_min. The two spans are compared. It is assumed that x1_max-x1_min>x2_max-x2_min. In this case, the feature dimension x1 is selected as the third split dimension.

Based on a same principle as that in the second optional implementation, the third split dimension is a feature dimension that corresponds to a span with a largest proportion and that is in all the feature dimensions of the historical training sample set. A proportion d of a span of feature values in any feature dimension meets a proportion formula: d=h/z, where h is a span corresponding to the any feature dimension of the historical training sample set, and z is a sum of spans of feature values in all feature dimensions.

FIG. 8 is used as an example. In this case, z=(x1_max-x1_min)+(x2_max-x2_min), a proportion of the span corresponding to the feature dimension x1 is dx1=(x1_max-x1_min)/z, and a proportion of the span corresponding to the feature dimension x2 is dx2=(x2_max-x2_min)/z. It is assumed that dx1>dx2. In this case, the feature dimension x2 is selected as the third split dimension.

Step A312. Determine a third split point in the third split dimension of the historical training sample set.

For example, the third split point is a value point randomly selected in the third split dimension of the historical training sample set. In this way, equal-probability split in the third split dimension may be implemented.

In actual implementation of this embodiment of this application, the third split node may be selected in another manner. This is not limited in this embodiment of this application.

Step A313. Split the third node based on the third split point in the third split dimension, where a value range that is in a third value distribution range and in which a value in the third split dimension is not greater than a value of the third split point is allocated to the left child node, and a value range that is in the third value distribution range and in which a value in the third split dimension is greater than the value of the third split point is allocated to the right child node.

The third value distribution range is the distribution range of the feature values in the historical training sample set, and includes a span range of feature values that are in each feature dimension and that are in the historical training set. In this way, when node split is performed, only a minimum value and a maximum value in values in each feature dimension need to be obtained, an amount of obtained data is small, calculation is simple, and model training efficiency is high.

FIG. 8 is still used as an example. It is assumed that the selected third split point is x1_value∈[x1_min, x1_max]. In this case, a value range, namely, [x1_min, x1_value], that is not greater than x1_value in the feature dimension x1 is allocated to the left child node P2 of the third node P1, and a value range, namely, [x1_value, x1_max], that is greater than x1_value in the feature dimension x1 is allocated to the right child node P3 of the third node P1.

The foregoing node split is only based on a value distribution range of feature data, and is not based on the feature data. Therefore, during node split, only a minimum value and a maximum value in values in each feature dimension need to be obtained, an amount of obtained data is small, calculation is simple, and model training efficiency is high.

It should be noted that, because the first analysis device has obtained the foregoing historical training sample set used for training, node split may be directly performed by using a sample. The manner of performing node split by using the value distribution range in step A313 may be replaced with the following steps: allocating, to the left child node, a sample that is in the historical training sample set and whose feature value in a third split dimension is not greater than a value of a third split point, and allocating, to the right child node, a sample that is in the historical training sample set and whose feature value in the third split dimension is greater than the value of the third split point.

If split of the machine learning model is not limited, a depth of the machine learning model may be increased unlimitedly, and split of the machine learning model may not be stopped until each leaf node has only sample points with a same label or has only one sample point through iteration. In this embodiment of this application, the depth of the tree may be controlled by setting the split stop condition, to avoid excessive split of the tree.

Optionally, the split stop condition includes at least one of the following:

Condition 1. A current split cost of the third node is greater than a split cost threshold.
Condition 2. A quantity of samples in the historical training sample set is less than a second sample quantity threshold.
Condition 3. A quantity of split times corresponding to the third node is greater than a threshold of a quantity of split times.
Condition 4. A depth of the third node in the machine learning model is greater than a depth threshold.
Condition 5. A proportion of a quantity of labels with a largest proportion, in labels corresponding to the historical training sample set, to a total label quantity corresponding to the historical training sample set is greater than a specified proportion threshold.

For the foregoing Condition 1, this embodiment of this application proposes a split cost concept. In the offline training process of the machine learning model, a current split cost of any node is negatively correlated with a size of a value distribution range of a training sample set of the any node, and the training sample set of the any node is a set of samples that are grouped to the any node and that are in a training sample set used to train the machine learning model. For example, the current split cost of the any node is a reciprocal of a sum of spans of feature values that are in all feature dimensions and that are of a sample in the training sample set of the any node. In this case, for the third node, the current split cost of the third node is negatively correlated with a size of the distribution range of the feature values in the historical training sample set, that is, a larger value distribution range indicates a smaller split cost. The current split cost of the third node is a reciprocal of a sum of spans of feature values that are in all the feature dimensions and that are in the historical training sample set. For example, the split cost threshold may be positive infinity.

$$C = \frac{1}{\sum_{j}^{N} \max_{j} - \min_{j}}$$

The current split cost of the third node meets a cost calculation formula: (Formula 3), where $\max_j - \min_j$ indicates a value obtained by subtracting a minimum value from a maximum value in feature values that are in a $j^{th}$ feature dimension and that fall within the value distribution range of the historical training sample set, namely, a span of the feature values in the feature dimension, where N is a total quantity of feature dimensions.

In this case, as shown in FIG. 8, a split cost of the node P1 is 1/z, where z=(x1_max-x1_min)+(x2_max-x2_min). As shown in FIG. 9, in the incremental training process, a split cost may be calculated when node split is performed each time, and is compared with the split cost threshold. In FIG. 9, it is assumed that an initial split cost value is 0, the split cost threshold is positive infinity, and calculated split costs in a depth direction of the tree are respectively 0, COST1 (the first time of node split), COST2 (the second time of node split), COST3 (the third time of node split), and the like. A quantity of split times is positively related to a split cost, and a larger quantity of split times indicates a higher split cost.

With Condition 1, when the split cost reaches a degree, node split is no longer performed, so that excessive split of the tree can be avoided, and operation overheads can be reduced.

For the foregoing Condition 2, when the quantity of samples in the historical training sample set of the third node is less than the second sample quantity threshold, it indicates that the historical training sample set has a small amount of data that is not insufficient to support effective node split. In this case, the offline training process is stopped, so that operation overheads can be reduced. For example, the second sample threshold may be 2 or 3.

For the foregoing Condition 3, the quantity of split times corresponding to the third node is a total quantity of times from the first time of split of a root node to current split of the third node. When the quantity of split times corresponding to the third node is greater than the threshold of the quantity of split times, it indicates that a current quantity of split times in the machine learning model has reached an upper limit. In this case, the offline training process is stopped, so that operation overheads can be reduced.

For the foregoing Condition 4, when the depth of the third node in the machine learning model is greater than the depth threshold, the offline training process is stopped, so that the depth of the machine learning model can be controlled.

For the foregoing Condition 5, the proportion of the quantity of labels with the largest proportion, in the labels corresponding to the historical training sample set, to the total label quantity is greater than the specified proportion threshold. In this case, it indicates that the quantity of labels with the largest proportion already meets a classification condition, and an accurate classification result may be determined based on the case. In this case, the offline training process is stopped, so that unnecessary split can be reduced, and operation overheads can be reduced.

Optionally, in the foregoing step 404, the process in which the local analysis device performs incremental training on the machine learning model based on the first training sample set is actually a training process of sequentially inputting a plurality of training samples in the first training sample set into the machine learning model (that is, one training sample is input once), and a plurality of training processes are executed. The training processes are the same, and each training process is actually a node traversal process. For any training sample in the first training sample set, the traversal process is performed. In this embodiment of this application, a first training sample is used as an example. It is assumed that the first training sample is any training sample in the first training sample set, and includes feature data in one or more feature dimensions. Referring to the structure of the sample in the foregoing historical training sample set, the feature data in the first training sample set is value data, and may be originally value data, or may be obtained by converting non-value data by using a specified algorithm. It is assumed that a first node is any non-leaf node in the machine learning model, and traversal is started from a root node of the machine learning model, to describe the traversal process in step 404. In this case, step 404 includes:

Step B 1. When a current split cost of the traversed first node is less than a historical split cost of the first node, add an associated second node, where the second node is a parent node or a child node of the first node.

In the incremental training process, the current split cost of the first node is a cost (namely, a cost at which the associated second node is added to the first node, where in this case, node split of the first node means adding a new branch to the first node) at which node split is performed on the first node based on the first training sample, the historical split cost of the first node is a cost at which node split is performed on the first node based on a historical training sample set of the first node, and the historical training sample set of the first node is a set of samples that are grouped to the first node and that are in a historical training sample set of the machine learning model. In this case, referring to the foregoing step 401, if current incremental training is the first time of incremental training performed after the machine learning model is received, and the first node is any third node mentioned above, the historical training sample set of the first node is the historical training sample set corresponding to the third node.

In this embodiment of this application, the current split cost of the first node and the historical split cost of the first node may be directly compared, to add the associated second node when the current split cost of the first node is less than the historical split cost of the first node. Further, a difference obtained by subtracting the historical split cost of the first node from the current split cost of the first node may be first obtained, and whether an absolute value of the difference is greater than a specified difference threshold is determined. In this way, it can be ensured that node split is performed only when the current split cost of the first node is far less than the historical split cost of the first node. In this way, a training cost may be reduced, and training efficiency may be improved.

The current split cost of the first node is negatively correlated with a size of a first value distribution range. The first value distribution range is a distribution range determined based on a feature value in the first training sample and a second value distribution range. The second value distribution range is a distribution range of feature values in the historical training sample set of the first node. Optionally, the first value distribution range is a distribution range determined based on a union set of the first training sample and the second value distribution range. For example, a sample in the historical training sample set of the first node includes feature data in two feature dimensions, a span range of feature values in a feature dimension x is [1, 10], and a span range of feature values in a feature dimension y is [5, 10]. In this case, the second value distribution range includes the span range [1, 10] of the feature values in the feature dimension x and the span range [5, 10] of the feature values in the feature dimension y. If a feature value that is in the feature dimension x and that is in the first training sample x is 9, and a feature value that is in the feature dimension y and that is in the first training sample is 13, a union set between the first training sample and the second value distribution range is separately obtained in different feature dimensions. In this case, span ranges of feature values that are in all feature dimensions and that fall within the first value distribution range include [1, 10] in the feature dimension x and [5, 13] in the feature dimension y.

For example, the current split cost of the first node is a reciprocal of a sum of spans of the feature values that are in all the feature dimensions and that fall within the first value distribution range. For a calculation manner of the current split cost of the first node, refer to the calculation manner of the current split cost of the third node. For example, the foregoing cost calculation formula (namely, Formula 3) is used for calculation. A difference is that a corresponding value distribution range in the formula is changed from the value distribution range of the historical training sample set to the first value distribution range. Details are not described again in this embodiment of this application.

For example, the historical split cost of the first node is a reciprocal of a sum of spans of the feature values that are in all the feature dimensions and that are of the sample in the historical training sample set of the first node. For a calculation manner of the historical split cost of the first node, refer to the calculation manner of the current split cost of the third node. For example, the foregoing cost calculation formula is used for calculation. A difference is that a corresponding value distribution range in the formula is changed from the value distribution range of the historical training sample set to the value distribution range of the historical training sample set of the first node. Details are not described again in this embodiment of this application.

The process of adding the associated second node may include:

Step B11. Determine span ranges of feature values that are in all feature dimensions and that fall within the first value distribution range.
Step B12. Add the second node based on a first split point in a first split dimension, where a value range that is in the first value distribution range and in which a value in the first split dimension is not greater than a value of the first split point is allocated to a left child node of the second node, and a value range that is in the first value distribution range and in which a value in the first split dimension is greater than the value of the first split point is allocated to a right child node of the second node.

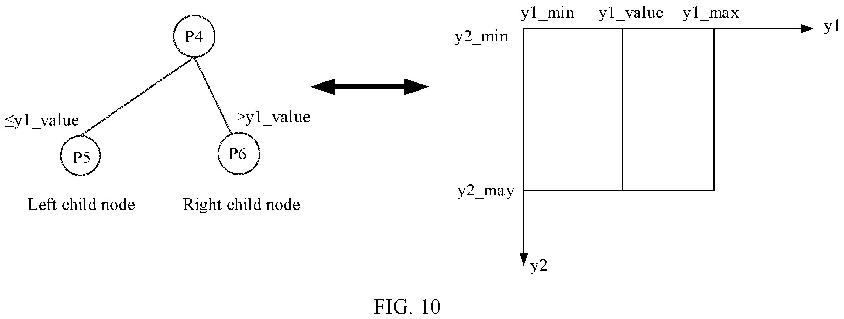

FIG. 10 is used as an example. It is assumed that a split point of the selected second node P4 is $y1\_value \in [y1\_min, y1\_max]$. In this case, a value range, namely, $[y1\_min, y1\_value]$ that is in the first value distribution range and that is less than or equal to $y1\_value$ in a feature dimension y1 is allocated to a left child node P5 of the second node P4, and a value range, namely, $[y1\_value, y1\_max]$ that is in the first value distribution range and that is greater than $y1\_value$ in the feature dimension y1 is allocated to a right child node P6 of the second node P4.

For a split process of the second node, refer to the split process of the third node in step A313. Details are not described again in this embodiment of this application.

The first split dimension is a split dimension determined from all the feature dimensions based on the span ranges of the feature values in all the feature dimensions, and the first split point is a value point that is determined in the first split dimension of the first value distribution range and that is used for split.

For example, in a first optional manner, the first split dimension is a feature dimension randomly selected from all the feature dimensions of the first value distribution range. In a second optional manner, the first split dimension is a feature dimension that corresponds to a largest span and that is in all the feature dimensions of the first value distribution range. For a corresponding principle, refer to the foregoing step A311. Details are not described again in this embodiment of this application.

Optionally, the first split point is a value point randomly selected in the first split dimension of the first value distribution range. In this way, equal-probability split in the first split dimension may be implemented.

In actual implementation of this embodiment of this application, the first split node may be selected in another manner. This is not limited in this embodiment of this application.

In a first case, when the first split dimension is different from a second split dimension, the second node is a parent node or a child node of the first node, that is, the second node is located at an upper level or a lower level of the first node.

The second split dimension is a historical split dimension of the first node in the machine learning model, and a second split point is a historical split point of the first node in the machine learning model. In this case, referring to the foregoing steps A311 and A312, when the first node is any third node mentioned above, the second split dimension is the foregoing third split dimension, and the second split point is the foregoing third split point.

In a second case, when the first split dimension is the same as the second split dimension, and the first split point is located on the right of the second split point, the second node is a parent node of the first node, and the first node is a left child node of the second node.

In a third case, when the first split dimension is the same as the second split dimension, and the first split point is located on the left of the second split point, the second node is a left child node of the first node.

As described above, node information of each non-leaf node may include a split dimension and a split point. For ease of description, in a subsequent embodiment of this application, a format "u>v" is used to indicate that the split dimension is u and the split point is v.

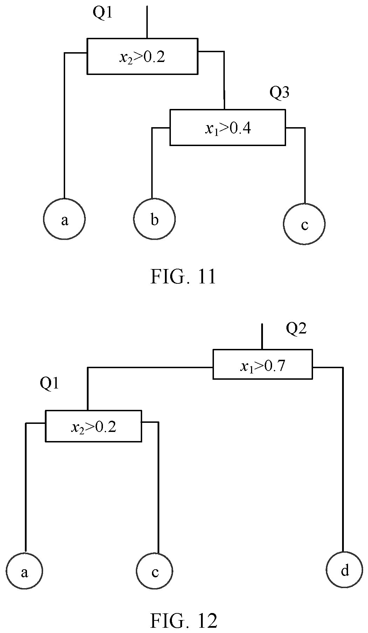

In the foregoing first case, FIG. 11 shows a machine learning model existing before the second node is added, where the model includes nodes Q1 and Q3. FIG. 9 shows a machine learning model existing after the second node is added to the machine learning model shown in FIG. 11. It is assumed that the node Q1 is the first node, the second split dimension thereof is $x_2$, the second split point thereof is 0.2, Q2 is the second node, the first split dimension thereof is $x_1$, and the first split point thereof is 0.7. Because the split dimensions of the first node and the second node are different, as shown in FIG. 9, the newly added second node is used as a parent node of the first node.

FIG. 12 shows another machine learning model existing before the second node is added, where the model includes nodes Q1 and Q2. FIG. 9 shows a machine learning model existing after the second node is added to the machine learning model shown in FIG. 12. It is assumed that the node Q1 is the first node, the second split dimension thereof is $x_2$, the second split point thereof is 0.2, Q3 is the second node, the first split dimension thereof is $x_1$, and the first split point thereof is 0.4. Because the split dimensions of the first node and the second node are different, the newly added second node is used as a child node of the first node.

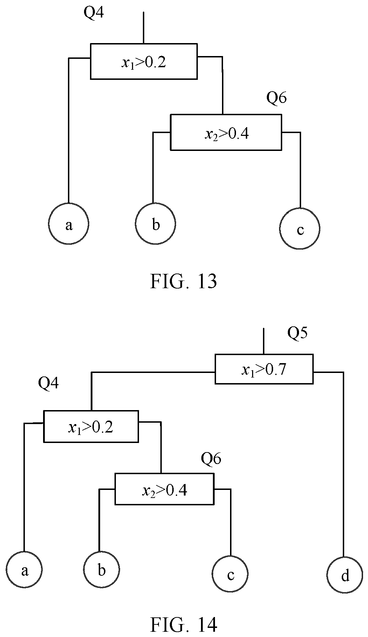

In the foregoing second case, FIG. 13 shows a machine learning model existing before the second node is added, where the model includes nodes Q4 and Q6. FIG. 14 shows a machine learning model existing after the second node is added to the machine learning model shown in FIG. 13. It is assumed that the node Q4 is the first node, the second split dimension thereof is $x_1$, the second split point thereof is 0.2, Q5 is the second node, the first split dimension thereof is $x_1$, and the first split point thereof is 0.7. Because the split dimensions of the first node and the second node are the same, and the first split point is located on the right of the second split point, the newly added second node is used as a parent node of the first node, and the first node is a left child node of the second node.

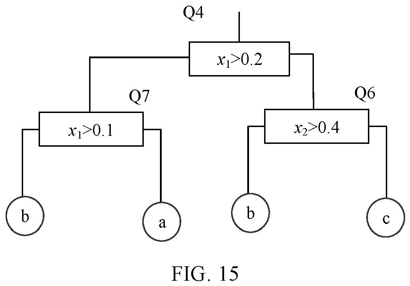

In the foregoing third case, FIG. 13 shows a machine learning model existing before the second node is added, where the model includes nodes Q4 and Q6. FIG. 15 shows a machine learning model existing after the second node is added to the machine learning model shown in FIG. 13. It is assumed that the node Q4 is the first node, the second split dimension thereof is $x_1$, the second split point thereof is 0.2, Q7 is the second node, the first split dimension thereof is $x_1$, and the first split point thereof is 0.1. Because the split dimensions of the first node and the second node are the same, and the first split point is located on the left of the second split point, the newly added second node is used as a left child node of the first node.

It should be noted that, after the second node is added, a child node that is in child nodes of the second node and that is not the first node is a leaf node, and a classification result of the leaf node needs to be determined. In other words, when the second node is a parent node of the first node, another child node of the second node is a leaf node. When the first node is a parent node of the second node, the two child nodes of the second node are both leaf nodes.

For a manner of determining the classification result of the leaf node in the incremental training process, refer to the manner of determining the classification result of the leaf node in the offline training process: The classification result of the leaf node is determined based on a total label quantity and a quantity of labels of a same category of a sample in a historical training sample set, where the total label quantity is a total quantity of labels corresponding to the sample in the historical training sample set allocated to the leaf node; or the classification result of the leaf node is determined based on proportions of labels of different categories, of a sample in a historical training sample set, to a total label quantity. Details are not described in this embodiment of this application.

As described above, each node in the machine learning model correspondingly stores node information. In this way, in the incremental training process, the historical split information, such as the split dimension, the split point, and the value distribution range of the historical training sample set, that is obtained from the node information of the first node is used to determine whether to add the second node to the first node, to implement fast incremental training. When it is determined that a node is a leaf node, a classification result of the leaf node may be quickly determined based on label distribution information in the node information.

Further, in the offline training process, after each node is determined, corresponding node information may be stored for each node, or after machine learning training is completed, corresponding node information is stored for each node for use in subsequent retraining. In the incremental training process, after the second node is added, node information of the second node needs to be correspondingly stored. A purpose of adding the second node is to separate samples of different categories. A branch in which the newly added second node is located is a branch that does not exist in original branches of the machine learning model, and is a newly added branch. Therefore, distribution of the original branches is not affected. Therefore, for a node that has a connection relationship with the second node, for example, a parent node or a child node, location information in node information corresponding to the parent node or the child node is correspondingly updated, and other information in the node information remains unchanged. In this way, incremental training may be performed on the machine learning model while an impact on another node is reduced as much as possible.

It should be noted that before the associated second node is added in step B 1, whether a sum of a quantity of samples in the historical training sample set of the first node and a quantity of first training samples is greater than a first sample quantity threshold may be further detected. The second node is added when the sum of the quantity of samples in the historical training sample set of the first node and the quantity of first training samples is greater than the first sample quantity threshold. In each incremental training process, the quantity of first training samples is 1.

Incremental training of the machine learning model is stopped when the sum of the quantity of samples in the historical training sample set of the first node and the quantity of first training samples is not greater than the first sample quantity threshold. In other words, the step of adding an associated second node is not performed. In this way, only when a quantity of samples is large, the second node is added, and node split is performed, to avoid ineffective node split, and overheads of a computing resource are reduced. In addition, because if a node corresponding to an excessively small quantity of samples is split, prediction performance of the machine learning model may be degraded. Therefore, the first sample quantity threshold is set, so that model precision can be ensured.

Step B2. When a current split cost of the first node is not less than a historical split cost of the first node, traverse each node in a subtree of the first node, determine a traversed node as a new first node, and execute the traversal process again until a current split cost of the traversed first node is less than a historical split cost of the first node or until traversal is performed at a target depth. In this case, the traversal process is stopped. It should be noted that, when the current split cost of the first node is not less than the historical split cost of the first node, the entire subtree of the first node is traversed, that is, when the first node is a leaf node, the foregoing traversal process is also stopped.

For the updated first node, when the current split cost of the first node is less than the historical split cost of the first node, a second node associated with the first node is added. For a process of adding the second node, refer to the foregoing step B 1. Details are not described again in this embodiment of this application. The traversal process is stopped when traversal is performed at the target depth. In this way, excessive split of the tree model can be avoided, and a quantity of levels of the tree can be prevented from being excessively large.

It should be noted that in the incremental training process, the historical training sample set of the machine learning model is a training sample set existing before a current training process, and is relative to the currently input first training sample. For example, if the incremental training process is the first incremental training process existing after step 401, the historical training sample set described in the incremental training process is the same as the historical training sample set in step 401. If the incremental training process is a $w^{th}$ (w is an integer greater than 1) incremental training process existing after step 401, the historical training sample set described in the incremental training process is the historical training sample set in step 401 and a set of training samples that are input in previous w-1 incremental training processes.

This embodiment of this application provides a training method. In the foregoing incremental training method, online incremental training can be performed on the machine learning model. In addition, because each node correspondingly stores node information, incremental training can be performed without obtaining a large quantity of samples, to implement a lightweight machine learning model.

It should be noted that an analysis device that maintains a machine learning model may reduce the machine learning model when a model reduction condition is met, so that a reduced machine learning model has a simpler a structure, and has high operation efficiency during prediction. In this embodiment of this application, a model reduction principle is actually a principle of searching for a connected domain, that is, combining split spaces that are in the machine learning model and that may belong to a same connected domain. The model reduction process includes the following steps:

combining a first non-leaf node and a second non-leaf node in the machine learning model, and combining a first leaf node and a second leaf node, to obtain a reduced machine learning model, where the reduced machine learning model is used to predict a classification result, the first leaf node is a child node of the first non-leaf node, the second leaf node is a child node of the second non-leaf node, the first leaf node and the second leaf node include a same classification result, and span ranges of feature values that are in historical training sample sets allocated to the two leaf nodes and that are in a same feature dimension are adjacent.

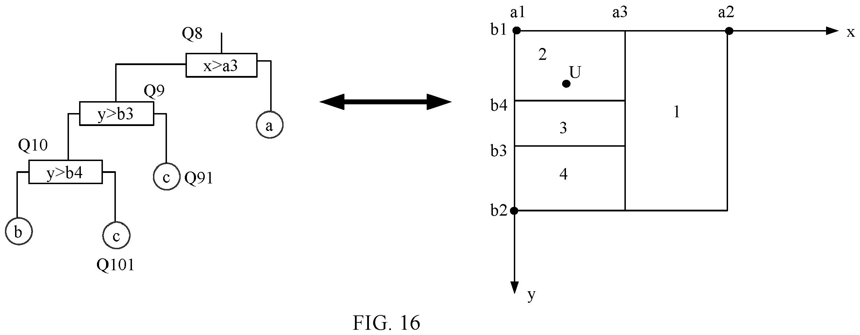

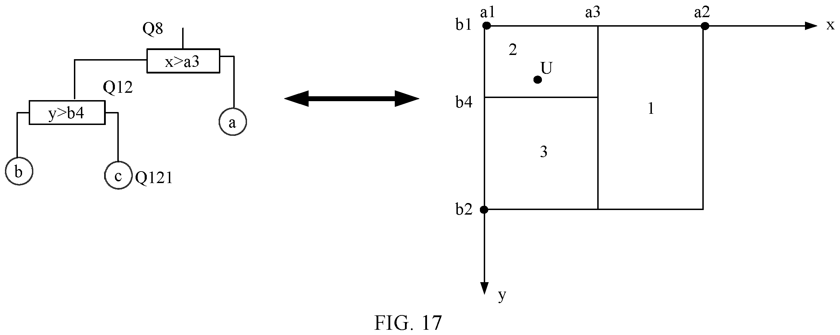

As shown in FIG. 16, it is assumed that a sample in a training sample set corresponding to the machine learning model includes feature data in two feature dimensions. The feature dimensions are respectively a feature dimension x and a feature dimension y, and the training sample set includes samples M (a1, b1), N (a1, b2), Q (a2, b1), and U (a4, b4). In the first time of node split, a split dimension is the feature dimension x, a split point is a3, a sample space in which the two-dimensional sample is located is split into two subspaces, and the node split corresponds to a left subtree and a right subtree of a node Q8 in FIG. 16. In the second time of node split, a split dimension is the feature dimension y, a split point is b3, and the node split corresponds to a left subtree and a right subtree of a node Q9 in FIG. 16. In the third time of node split, a split dimension is the feature dimension y, a split point is b4, and the node split corresponds to a left subtree and a right subtree of a node Q10 in FIG. 16. Therefore, it may be learned that the space in which the samples M (a1, b1), N (a1, b2), Q (a2, b1), and U (a4, b4) are located is split into a total of four subspaces 1 to 4. It may be learned from a schematic diagram of space split on the right in FIG. 16 that classification results of leaf nodes Q91 and Q101 corresponding to the subspaces 3 and 4 are both c, and span ranges of feature values corresponding to the two leaf nodes are adjacent. In this case, the two leaf nodes may be combined to form a connected domain, and a subspace obtained through combination does not affect an actual classification result of the machine learning model. It may be learned from the machine learning model on the left in FIG. 16 that labels of the leaf node Q91 of the non-leaf node Q9 and the leaf node Q101 of the non-leaf node Q10 are the same, and are both c, and span ranges of feature values on a y-axis are respectively [b4, b3] and [b3, and b2] that are adjacent to each other. Therefore, the non-leaf node Q9 and the non-leaf node Q10 are respectively the first non-leaf node and the second non-leaf node, and the leaf nodes of the two nodes are respectively the first leaf node and the second leaf node. As shown in FIG. 17, a new subspace 3 is finally formed by combining the subspace 3 and the subspace 4, a new non-leaf node Q12 is formed by combining the non-leaf node Q9 and the non-leaf node Q10, and a new leaf node Q121 is formed by combining the leaf node Q91 and the leaf node Q101. Corresponding node information is also combined. The node information is actually combined to obtain a union set of corresponding parameters (namely, parameters of a same type) in the node information. For example, the span ranges [b4, b3] and [b3, b2] on the y-axis are combined into [b4, b2].

The reduced machine learning model has a simpler structure, so that a quantity of branch levels of a tree is reduced, and a quantity of levels of the tree is prevented from being excessively large. Although a model architecture changes, a prediction result of the model is not affected. This can save storage space, and improve prediction efficiency. In addition, model overfitting can be avoided by using the reduction process. Optionally, the reduction process may be periodically executed, and the reduction process needs to be executed from a bottom level of the machine learning model in a bottom-up sequence (or in descending order of depths).

The model reduction process may be executed by the first analysis device after step 401 or step 405, and the reduced machine learning model may be sent to the local analysis device, so that the local analysis device performs sample analysis based on the machine learning model, that is, predicts a classification result. Because a size (namely, a size of memory occupied by the model) of the reduced model becomes smaller, when a classification result is predicted by using the model, a prediction speed is higher than that of an unreduced model, prediction efficiency is higher, and transmission overheads of the model are correspondingly reduced. Further, if the reduced model is only used for sample analysis, historical split information may not be recorded in node information in the model. In this way, this can further reduce a size of the model and improve prediction efficiency of the model.

It should be noted that, in FIG. 8 to FIG. 17, if the foregoing feature data is feature data of a time series, any feature dimension is any feature dimension in the data feature and/or the extraction feature (for a specific feature, refer to the foregoing embodiment). When the foregoing feature data is data that has a specified feature, for example, network KPI data, any feature dimension is any one of the foregoing KPI categories. For example, if data of a delay is used as feature data, a feature dimension of the feature data is the delay. For another example, if data of a packet loss rate is used as feature data, a feature dimension of the feature data is the packet loss rate. For a specific definition, refer to the foregoing embodiments and the explanations in FIG. 7. Details are not described again in this embodiment of this application.

During model training, a machine learning model with a complete structure instead of a reduced machine learning model needs to be used. Therefore, it may be learned that the machine learning model sent to the local analysis device in step 402 is an unreduced machine learning model directly obtained in step 401, to support the local analysis device in performing incremental training on the machine learning model. In another optional manner, the machine learning model sent to the local analysis device in step 402 may be a reduced machine learning model. However, the machine learning model needs to carry additional node information that is not combined. In this way, the local analysis device may recover an unreduced machine learning model based on the reduced machine learning model and the node information that is not combined, to perform incremental training on the machine learning model.

The model reduction process may be executed by the local analysis device after step 404, and the reduced machine learning model may be used to perform sample analysis, that is, predicts a classification result. When incremental training is subsequently performed again, a used model is an unreduced machine learning model.

It should be noted that, in the foregoing embodiment of this application, an example in which the local analysis device directly performs incremental training on the machine learning model based on the first training sample set obtained from the local analysis device is used for description. In actual implementation of this embodiment of this application, the foregoing local analysis device may indirectly perform incremental training on the machine learning model based on the first training sample set obtained from the local analysis device. In an implementation, the local analysis device may send the current machine learning model and the first training sample set to the first analysis device, so that the first analysis device performs incremental training on the machine learning model based on the first training sample set, and sends the machine learning model obtained through training to the local analysis device. For the incremental training process, refer to the foregoing step 404. Details are not described again in this embodiment of this application. In another implementation, the local analysis device may send the first training sample set to the first analysis device. The first analysis device integrates the first training sample set and the historical training sample used to train the machine learning model, to obtain a new historical training sample, and performs offline training on the initial machine learning model based on the historical training sample. A training result is the same as a result of performing incremental training based on the first training sample set. For the offline training process, refer to the foregoing step 401. Details are not described again in this embodiment of this application.

In a conventional model training method, after offline training is performed, once the machine learning model is deployed on the local analysis device, incremental training cannot be performed. However, in the model training method provided in this embodiment of this application, the machine learning model supports incremental training, and may be well adapted to a new training sample. Particularly, in the anomaly detection scenario, the machine learning model may be well adapted to occurrence of a new abnormal pattern and a sample with a new label, and the model obtained through training can accurately detect different abnormal patterns. Therefore, this implements model generalization, ensures prediction performance, and effectively improves user experience.

Further, if the conventional model training method is applied to the application scenario provided in this embodiment of this application, the local analysis device on which the machine learning model is deployed needs to collect a large quantity of samples, and perform sample batch training. Because a historical training sample needs to be accessed during training of the machine learning model, a large quantity of historical training samples further need to be stored. Consequently, a large quantity of memory and computing resources are consumed, and a training cost is high.

In this embodiment of this application, in the incremental training or offline training process, node split is performed based on a value distribution range of a training sample set, and there is no need to access a large quantity of historical training samples. Therefore, occupation of a memory resource and a computing resource is effectively reduced, and a training cost is reduced. In addition, the foregoing node information carries related information of each node, so that the machine learning model can be lightweight, to further facilitate deployment of the machine learning model, and implement effective model generalization.

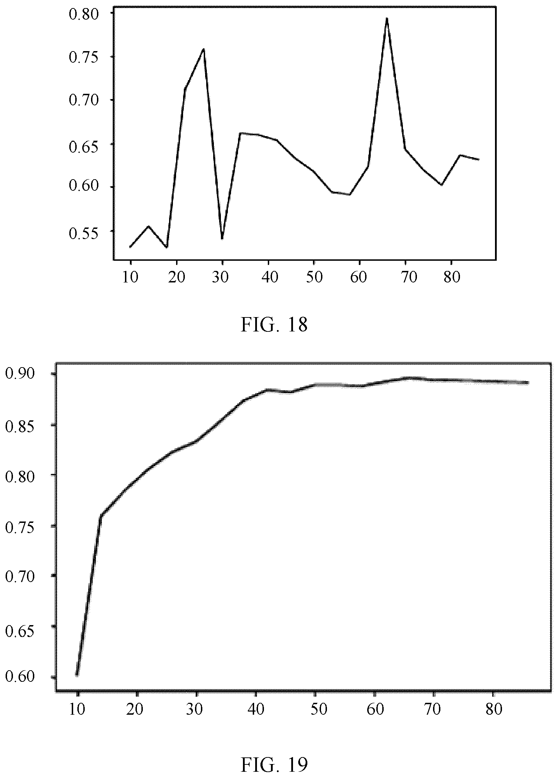

FIG. 18 is a schematic diagram of an incremental training effect of a conventional machine learning model. FIG. 19 is a schematic diagram of an incremental training effect of a machine learning model according to an embodiment of this application. A horizontal axis indicates a percentage of input training samples to a total quantity of training samples. A vertical axis indicates a performance indicator that reflects model performance. A larger indicator value indicates better model performance. In FIG. 18 and FIG. 19, it is assumed that in a scenario in which anomaly detection is performed on KPIs of a router, training samples obtained by a local analysis device is used as a training sample set M to separately train the conventional machine learning model and the machine learning model provided in this embodiment of this application. The incremental training process is periodically executed, and 10% of samples in the training sample set M are input in each round of incremental training. In this case, performance of the model obtained by training the conventional machine learning model in an incremental training manner fluctuates greatly, and performance is unstable. However, after performance of the model obtained through training in the incremental training manner provided in this embodiment of this application gradually increases, performance is consistently maintained at approximately 90%, and performance is stable. Therefore, it may be learned that, in the model training method provided in this embodiment of this application, a machine learning model with stable performance may be obtained through training, to ensure model generalization.

A sequence of the steps in the model training method provided in this embodiment of this application may be properly adjusted, and a step may be added or removed based on a case. Any variation readily figured out by a person skilled in the art within the technical scope disclosed in this application shall fall within the protection scope of this application. Therefore, details are not described.

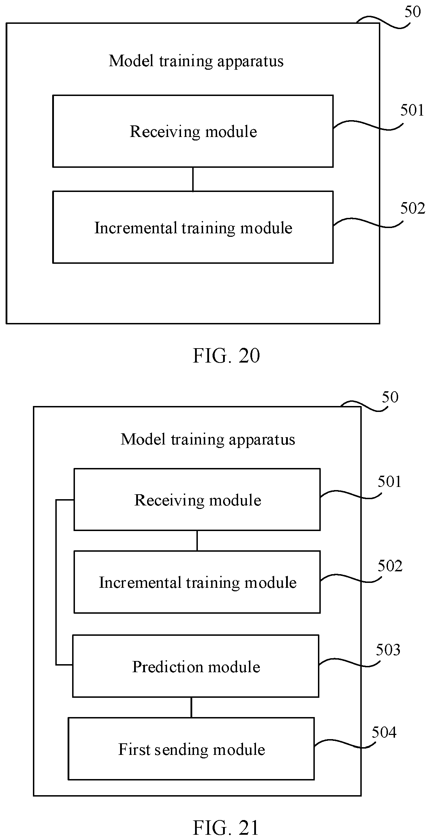

An embodiment of this application provides a model training apparatus 50. As shown in FIG. 20, the model training apparatus 50 is applied to a local analysis device and includes:

a receiving module 501, configured to receive a machine learning model sent by a first analysis device; and
an incremental training module 502, configured to perform incremental training on the machine learning model based on a first training sample set, where feature data in the first training sample set is feature data from a local network corresponding to the local analysis device.

This embodiment of this application provides the model training apparatus. The receiving module receives the machine learning model sent by the first analysis device. The incremental training module performs incremental training on the machine learning model based on the first training sample set obtained from the local network corresponding to the local analysis device. In an aspect, the feature data in the first training sample set is feature data obtained from the local network corresponding to the local analysis device, and is better adapted to an application scenario of the local analysis device. The first training sample set including the feature data obtained by the local analysis device from the corresponding local network is used to perform model training, so that the machine learning model obtained through training is better adapted to a requirement of the local analysis device, to implement model customization, and improve model application flexibility. In another aspect, the machine learning model is trained in a manner of combining offline training and incremental training, so that incremental training can be performed on the machine learning model when a category or a pattern of the feature data obtained by the local analysis device changes, to implement flexible adjustment of the machine learning model, and ensure that the machine learning model obtained through training meets the requirement of the local analysis device. Therefore, compared with a related technology, the model training apparatus provided in this embodiment of this application can be effectively adapted to the requirement of the local analysis device.

Optionally, as shown in FIG. 21, the apparatus 50 further includes:

a prediction module 503, configured to: after the machine learning model sent by the first analysis device is received, predict a classification result by using the machine learning model; and
a first sending module 504, configured to send prediction information to an evaluation device, where the prediction information includes the predicted classification result, so that the evaluation device evaluates, based on the prediction information, whether the machine learning model is degraded, where
the incremental training module 502 is configured to:
after a training instruction sent by the evaluation device is received, perform incremental training on the machine learning model based on the first training sample set, where the training instruction is used to instruct to train the machine learning model.

Optionally, the machine learning model is used to predict a classification result of to-be-predicted data including one or more pieces of key performance indicator KPI feature data, and the KPI feature data is feature data of a KPI time series or is KPI data; and
the prediction information further includes a KPI category corresponding to the KPI feature data in the to-be-predicted data, an identifier of a device to which the to-be-predicted data belongs, and a collection moment of KPI data corresponding to the to-be-predicted data.

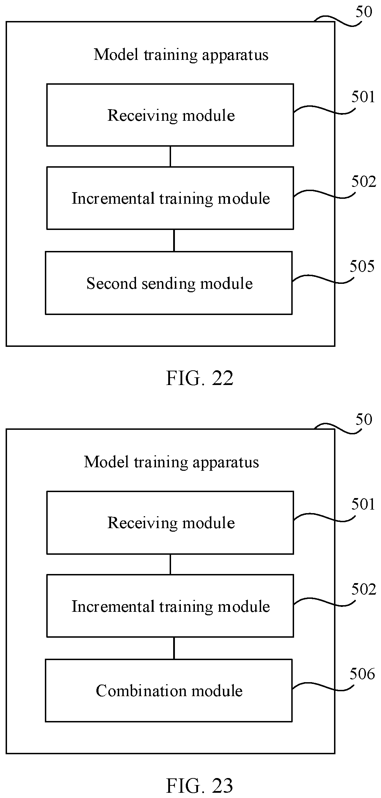

Optionally, as shown in FIG. 22, the apparatus 50 further includes:
a second sending module 505, configured to: when performance of the machine learning model obtained through incremental training does not meet a performance fulfillment condition, send a retraining request to the first analysis device, where the retraining request is used to request the first analysis device to retrain the machine learning model.

Optionally, the machine learning model is a tree model, and the incremental training module 502 is configured to:
for any training sample in the first training sample set, start traversal from a root node of the machine learning model, to execute the following traversal process:

when a current split cost of a traversed first node is less than a historical split cost of the first node, adding an associated second node, where the first node is any non-leaf node in the machine learning model, and the second node is a parent node or a child node of the first node; or
when a current split cost of a first node is not less than a historical split cost of the first node, traversing each node in a subtree of the first node, determining a traversed node as a new first node, and executing the traversal process again until a current split cost of the traversed first node is less than a historical split cost of the first node or until traversal is performed at a target depth, where
the current split cost of the first node is a cost at which node split is performed on the first node based on a first training sample, the first training sample is any training sample in the first training sample set, the first training sample includes feature data in one or more feature dimensions, the feature data is value data, the historical split cost of the first node is a cost at which node split is performed on the first node based on a historical training sample set of the first node, and the historical training sample set of the first node is a set of samples that are grouped to the first node and that are in a historical training sample set of the machine learning model.

Optionally, the current split cost of the first node is negatively correlated with a size of a first value distribution range, the first value distribution range is a distribution range determined based on a feature value in the first training sample and a second value distribution range, the second value distribution range is a distribution range of feature values in the historical training sample set of the first node, and the historical split cost of the first node is negatively correlated with a size of the second value distribution range.

Optionally, the current split cost of the first node is a reciprocal of a sum of spans of feature values that are in all feature dimensions and that fall within the first value distribution range, and the historical split cost of the first node is a reciprocal of a sum of spans of feature values that are in all the feature dimensions and that fall within the second value distribution range.

Optionally, the incremental training module 502 is configured to:

determine span ranges of feature values that are in all feature dimensions and that fall within the first value distribution range; and

add the second node based on a first split point in a first split dimension, where a value range that is in the first value distribution range and in which a value in the first split dimension is not greater than a value of the first split point is allocated to a left child node of the second node, a value range that is in the first value distribution range and in which a value in the first split dimension is greater than the value of the first split point is allocated to a right child node of the second node, the first split dimension is a split dimension determined from all the feature dimensions based on the span ranges of the feature values in all the feature dimensions, and the first split point is a value point that is determined in the first split dimension of the first value distribution range and that is used for split, where when the first split dimension is different from a second split dimension, the second node is a parent node or a child node of the first node, the second split dimension is a historical split dimension of the first node in the machine learning model, and a second split point is a historical split point of the first node in the machine learning model; when the first split dimension is the same as the second split dimension, and the first split point is located on the right of the second split point, the second node is a parent node of the first node, and the first node is a left child node of the second node; or when the first split dimension is the same as the second split dimension, and the first split point is located on the left of the second split point, the second node is a left child node of the first node.

Optionally, a first split dimension is a feature dimension randomly selected from all feature dimensions of the first value distribution range, or a first split dimension is a feature dimension that corresponds to a largest span and that is in all feature dimensions of the first value distribution range; and/or
a first split point is a value point randomly selected in the first split dimension of the first value distribution range.

Optionally, the incremental training module 502 is configured to:

add the second node when a sum of a quantity of samples in the historical training sample set of the first node and a quantity of first training samples is greater than a first sample quantity threshold; and
the apparatus further includes:
a stop module, configured to stop incremental training of the machine learning model when the sum of the quantity of samples in the historical training sample set of the first node and the quantity of first training samples is not greater than the first sample quantity threshold.

In an optional implementation, as shown in FIG. 23, the apparatus 50 further includes:
a combination module 506, configured to: combine a first non-leaf node and a second non-leaf node in the machine learning model, and combine a first leaf node and a second leaf node, to obtain a reduced machine learning model, where the reduced machine learning model is used to predict a classification result.

In another optional implementation, the receiving module 501 is further configured to receive a reduced machine learning model sent by the first analysis device, where the reduced machine learning model is obtained after the first analysis device combines a first non-leaf node and a second non-leaf node in the machine learning model, and combines a first leaf node and a second leaf node.

The first leaf node is a child node of the first non-leaf node, the second leaf node is a child node of the second non-leaf node, the first leaf node and the second leaf node include a same classification result, and span ranges of feature values that are in historical training sample sets allocated to the two leaf nodes and that are in a same feature dimension are adjacent.

Optionally, each node in the machine learning model correspondingly stores node information, the node information of any node in the machine learning model includes label distribution information, the label distribution information is used to reflect proportions of labels of different categories, of a sample in a historical training sample set allocated to the corresponding node, to a total label quantity, the total label quantity is a total quantity of labels corresponding to the sample in the historical training sample set allocated to the any node, node information of any non-leaf node further includes historical split information, and the historical split information is information used to split the corresponding node.

Optionally, the historical split information includes location information of the corresponding node in the machine learning model, a split dimension of the corresponding node, a split point of the corresponding node, a value distribution range of a historical training sample set allocated to the corresponding node, and a historical split cost of the corresponding node; and
the label distribution information includes the total label quantity and a quantity of labels of a same category of the sample in the historical training sample set allocated to the corresponding node; or the proportions of the labels of different categories, of the sample in the historical training sample set allocated to the corresponding node, to the total label quantity.

Optionally, the first training sample set includes a sample that is obtained by screening a sample obtained by the local analysis device and that meets a low discrimination condition, and the low discrimination condition includes at least one of the following:

an absolute value of a difference between any two probabilities in a target probability set obtained by predicting a sample by using the machine learning model is less than a first difference threshold, where the target probability set includes probabilities of first n classification results arranged in descending order of probabilities, 1<n<m, and m is a total quantity of probabilities obtained by predicting the sample by using the machine learning model; or

an absolute value of a difference between any two probabilities in probabilities obtained by predicting a sample by using the machine learning model is less than a second difference threshold; or

an absolute value of a difference between a highest probability and a lowest probability in probabilities that are of a plurality of classification results and that are obtained by predicting a sample by using the machine learning model is less than a third difference threshold; or

an absolute value of a difference between any two probabilities in probabilities that are of a plurality of classification results and that are obtained by predicting a sample by using the machine learning model is less than a fourth difference threshold; or

probability distribution entropy E that is of a plurality of classification results and that is obtained by predicting a sample by using the machine learning model is greater than a specified distribution entropy threshold, and E meets:

$$E = -\sum_i P(\mathrm{x_i})\log_b P(\mathrm{x_i})$$
,

where

$x_i$ represents an $i^{th}$ classification result, $P(x_i)$ represents a probability that is of the $i^{th}$ classification result of the sample and that is obtained through prediction, b is a specified base, and $0 \leq P(x_i) \leq 1$.

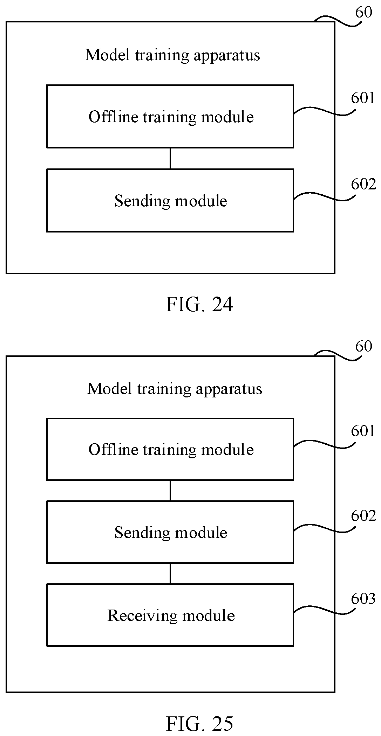

An embodiment of this application provides a model training apparatus 60. As shown in FIG. 24, the model training apparatus 60 is applied to a first analysis device and includes:

an offline training module 601, configured to perform offline training based on a historical training sample set to obtain a machine learning model; and
a sending module 602, configured to send the machine learning model to a plurality of local analysis devices, so that the local analysis device performs incremental training on the machine learning model based on a first training sample set, where feature data in a training sample set used by any local analysis device to train the machine learning model is feature data from a local network corresponding to the any local analysis device.

The sending module may distribute, to each local analysis device, the machine learning model obtained by the offline training module through training, so that each local analysis device performs incremental training, to ensure performance of the machine learning model on each local analysis device. In this way, the first analysis device does not need to train a corresponding machine learning model for each local analysis device, to effectively reduce overall training duration of the first analysis device. In addition, the model obtained through offline training may be used as a basis for performing incremental training by each local analysis device, to improve universality of the model obtained through offline training, implement model generalization, and reduce an overall training cost of the first analysis device.
In addition, the local analysis device receives the machine learning model sent by the first analysis device, and may perform incremental training on the machine learning model based on the first training sample set obtained from the local network corresponding to the local analysis device. In an aspect, the feature data in the first training sample set is feature data obtained from the local network corresponding to the local analysis device, and is better adapted to an application scenario of the local analysis device. The first training sample set including the feature data obtained by the local analysis device from the corresponding local network is used to perform model training, so that the machine learning model obtained through training is better adapted to a requirement of the local analysis device, to implement model customization, and improve model application flexibility. In another aspect, the machine learning model is trained in a manner of combining offline training and incremental training, so that incremental training can be performed on the machine learning model when a category or a pattern of the feature data obtained by the local analysis device changes, to implement flexible adjustment of the machine learning model, and ensure that the machine learning model obtained through training meets the requirement of the local analysis device. Therefore, compared with a related technology, the model training method provided in this embodiment of this application can be effectively adapted to the requirement of the local analysis device.
Optionally, the historical training sample set is a set of training samples sent by the plurality of local analysis devices.
As shown in FIG. 25, the apparatus 60 further includes:
a receiving module 603, configured to:

after the machine learning model is sent to the local analysis device, receive a retraining request sent by the local analysis device, and retrain the machine learning model based on a training sample set sent by the local analysis device that sends the retraining request; or

receive a retraining request sent by the local analysis device, and retrain the machine learning model based on a training sample set sent by the local analysis device that sends the retraining request and a training sample set sent by another local analysis device; or

receive training sample sets sent by at least two of the local analysis devices, and retrain the machine learning model based on the received training sample sets.

Optionally, the machine learning model is a tree model, and the offline training module is configured to:

obtain a historical training sample set having a determined label, where a training sample in the historical training sample set includes feature data in one or more feature dimensions, and the feature data is value data;

create a root node;

use the root node as a third node, and execute an offline training process until a split stop condition is met; and

determine a classification result for each leaf node to obtain the machine learning model, where the offline training process includes:

splitting the third node to obtain a left child node and a right child node of the third node;

using the left child node as an updated third node, using, as an updated historical training sample set, a left sample set that is in the historical training sample set and that is allocated to the left child node, and executing the offline training process again; and

using the right child node as the updated third node, using, as the updated historical training sample set, a right sample set that is in the historical training sample set and that is allocated to the right child node, and executing the offline training process again.

Optionally, the offline training module 601 is configured to:

split the third node based on a value distribution range of the historical training sample set to obtain the left child node and the right child node of the third node, where the value distribution range of the historical training sample set is a distribution range of feature values in the historical training sample set.

Optionally, the offline training module 601 is configured to:

determine a third split dimension from all feature dimensions of the historical training sample set;

determine a third split point in the third split dimension of the historical training sample set; and

allocate, to the left child node, a value range that is in a third value distribution range and in which a value in the third split dimension is not greater than a value of the third split point, and allocate, to the right child node, a value range that is in the third value distribution range and in which a value in the third split dimension is greater than the value of the third split point, where the third value distribution range is the distribution range of the feature values in the historical training sample set of the third node.

Optionally, the split stop condition includes at least one of the following:

a current split cost of the third node is greater than a split cost threshold; or

a quantity of samples in the historical training sample set is less than a second sample quantity threshold; or

a quantity of split times corresponding to the third node is greater than a threshold of a quantity of split times; or

a depth of the third node in the machine learning model is greater than a depth threshold; or

a proportion of a quantity of labels with a largest proportion, in labels corresponding to the historical training sample set, to a total label quantity of the labels corresponding to the historical training sample set is greater than a specified proportion threshold.

Optionally, the current split cost of the third node is negatively correlated with a size of the distribution range of the feature values in the historical training sample set.

Optionally, the current split cost of the third node is a reciprocal of a sum of spans of feature values that are in all the feature dimensions and that are in the historical training sample set.

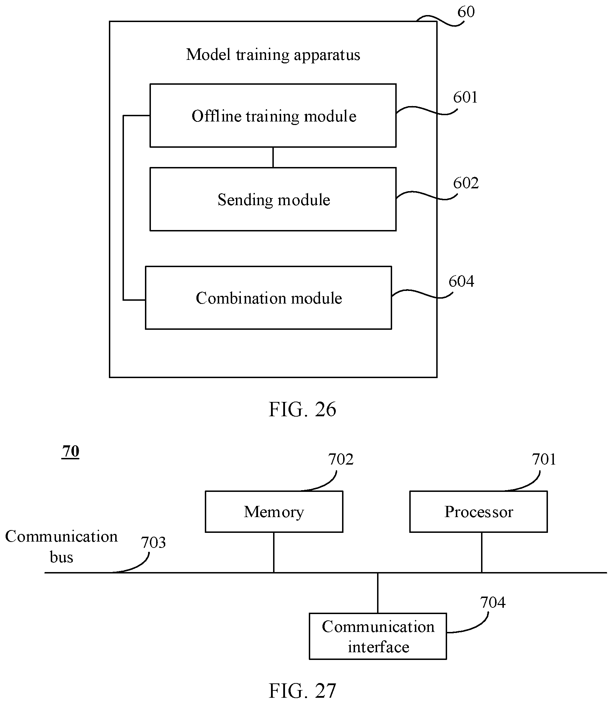

Optionally, as shown in FIG. 26, the apparatus 60 further includes:

a combination module 604, configured to: combine a first non-leaf node and a second non-leaf node in the machine learning model, and combine a first leaf node and a second leaf node, to obtain a reduced machine learning model, where the reduced machine learning model is used to predict a classification result, the first leaf node is a child node of the first non-leaf node, the second leaf node is a child node of the second non-leaf node, the first leaf node and the second leaf node include a same classification result, and span ranges of feature values that are in historical training sample sets allocated to the two leaf nodes and that are in a same feature dimension are adjacent.

The sending module 602 is further configured to send the reduced machine learning model to the local analysis device, so that the local analysis device predicts a classification result based on the reduced machine learning model.

Optionally, each node in the machine learning model correspondingly stores node information, the node information of any node in the machine learning model includes label distribution information, the label distribution information is used to reflect proportions of labels of different categories, of a sample in a historical training sample set allocated to the corresponding node, to a total label quantity, the total label quantity is a total quantity of labels corresponding to the sample in the historical training sample set allocated to the any node, node information of any non-leaf node further includes historical split information, and the historical split information is information used to split the corresponding node.

Optionally, the historical split information includes location information of the corresponding node in the machine learning model, a split dimension of the corresponding node, a split point of the corresponding node, a value distribution range of a historical training sample set allocated to the corresponding node, and a historical split cost of the corresponding node; and

the label distribution information includes the total label quantity and a quantity of labels of a same category of the sample in the historical training sample set allocated to the corresponding node; or the proportions of the labels of different categories, of the sample in the historical training sample set allocated to the corresponding node, to the total label quantity.

Optionally, the first training sample set includes a sample that is obtained by screening a sample obtained by the local analysis device and that meets a low discrimination condition, and the low discrimination condition includes at least one of the following:

an absolute value of a difference between any two probabilities in a target probability set obtained by predicting a sample by using the machine learning model is less than a first difference threshold, where the target probability set includes probabilities of first n classification results arranged in descending order of probabilities, $1<n<m$, and m is a total quantity of probabilities obtained by predicting the sample by using the machine learning model; or

an absolute value of a difference between any two probabilities in probabilities obtained by predicting a sample by using the machine learning model is less than a second difference threshold; or

an absolute value of a difference between a highest probability and a lowest probability in probabilities that are of a plurality of classification results and that are obtained by predicting a sample by using the machine learning model is less than a third difference threshold; or

an absolute value of a difference between any two probabilities in probabilities that are of a plurality of classification results and that are obtained by predicting a sample by using the machine learning model is less than a fourth difference threshold; or

probability distribution entropy E that is of a plurality of classification results and that is obtained by predicting a sample by using the machine learning model is greater than a specified distribution entropy threshold, and E meets:

$$E = -\sum_i P(\mathrm{x_i}) \log_b P(\mathrm{x_i})$$

,

where

$x_i$ represents an ith classification result, $P(x_i)$ represents a probability that is of the ith classification result of the sample and that is obtained through prediction, b is a specified base, and $0 \leq P(x_i) \leq 1$.

FIG. 27 is a block diagram of a model training apparatus according to an embodiment of this application. The model training apparatus may be the foregoing analysis device such as the local analysis device or the first analysis device. As shown in FIG. 27, the analysis device 70 includes a processor 701 and a memory 702.

The memory 701 is configured to store a computer program, and the computer program includes program instructions.

The processor 702 is configured to invoke the computer program to implement the model training method provided in the embodiments of this application.

Optionally, the network device 70 further includes a communication bus 703 and a communication interface 704.

The processor 701 includes one or more processing cores, and the processor 701 executes various functional applications and performs data processing by running the computer program.

The memory 702 may be configured to store a computer program. Optionally, the memory may store an operating system and an application program unit that is required for at least one function. The operating system may be an operating system such as a real time operating system (Real Time executive, RTX), LINUX, UNIX, WINDOWS, or OS X.

There may be a plurality of communication interfaces 704. The communication interface 704 is configured to communicate with another storage device or network device. For example, in this embodiment of this application, the communication interface 704 may be configured to receive sample data sent by a network device in a communication network.

The memory 702 and the communication interface 704 are separately connected to the processor 701 by using the communication bus 703.

An embodiment of this application provides a computer storage medium. The computer storage medium stores instructions. When the instructions are executed by a processor, the model training method provided in the embodiments of this application is implemented.

An embodiment of this application provides a model training system, including a first analysis device and a plurality of local analysis devices.

The first analysis device includes the model training apparatus in any one of the foregoing embodiments. The local analysis device includes the model training apparatus in any one of the foregoing embodiments. For example, for deployment of each device in the model training system, refer to deployment of each device in the application scenarios shown in FIG. 1 to FIG. 3. For example, the model training system further includes one or more of a network device, an evaluation device, a storage device, and a management device. For descriptions of a related device, refer to FIG. 1 to FIG. 3. Details are not described again in this embodiment of this application.

In this embodiment of this application, "for A, refer to B" means that A may be the same as B, or means that a simple variation may be obtained based on B.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, some or all of the procedures or the functions according to the embodiments of this application are generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

The foregoing descriptions are merely optional embodiments of this application, but are not intended to limit this application. Any modification, equivalent replacement, improvement, or the like made without departing from the spirit and principle of this application shall fall within the protection scope of this application.

**Claims**

1. A model training method, applied to a local analysis device, and comprising:

   receiving a machine learning model sent by a first analysis device; and
   performing incremental training on the machine learning model based on a first training sample set, wherein feature data in the first training sample set is feature data from a local network corresponding to the local analysis device.

2. The method according to claim 1, wherein after the receiving a machine learning model sent by a first analysis device, the method further comprises:

   predicting a classification result by using the machine learning model; and
   sending prediction information to an evaluation device, wherein the prediction information comprises the predicted classification result, so that the evaluation device evaluates, based on the prediction information, whether the machine learning model is degraded; and
   the performing incremental training on the machine learning model based on a first training sample set comprises:
   after receiving a training instruction sent by the evaluation device, performing incremental training on the machine learning model based on the first training sample set, wherein the training instruction is used to instruct to train the machine learning model.

3. The method according to claim 2, wherein the machine learning model is used to predict a classification result of to-be-predicted data consisting of one or more pieces of key performance indicator KPI feature data, and the KPI feature data is feature data of a KPI time series or is KPI data; and
the prediction information further comprises a KPI category corresponding to the KPI feature data in the to-be-predicted data, an identifier of a device to which the to-be-predicted data belongs, and a collection moment of KPI data corresponding to the to-be-predicted data.

4. The method according to any one of claims 1 to 3, wherein the method further comprises:
when performance of the machine learning model obtained through incremental training does not meet a performance fulfillment condition, sending a retraining request to the first analysis device, wherein the retraining request is used to request the first analysis device to retrain the machine learning model.

5. The method according to any one of claims 1 to 4, wherein the machine learning model is a tree model, and the performing incremental training on the machine learning model based on a first training sample set comprises:
for any training sample in the first training sample set, starting traversal from a root node of the machine learning model, to execute the following traversal process:

when a current split cost of a traversed first node is less than a historical split cost of the first node, adding an associated second node, wherein the first node is any non-leaf node in the machine learning model, and the second node is a parent node or a child node of the first node; or
when a current split cost of a first node is not less than a historical split cost of the first node, traversing each node in a subtree of the first node, determining a traversed node as a new first node, and executing the traversal process again until a current split cost of the traversed first node is less than a historical split cost of the first node or until traversal is performed at a target depth, wherein
the current split cost of the first node is a cost at which node split is performed on the first node based on a first training sample, the first training sample is any training sample in the first training sample set, the first training sample comprises feature data in one or more feature dimensions, the feature data is value data, the historical split cost of the first node is a cost at which node split is performed on the first node based on a historical training sample set of the first node, and the historical training sample set of the first node is a set of samples that are grouped to the first node and that are in a historical training sample set of the machine learning model.

6. The method according to claim 5, wherein the current split cost of the first node is negatively correlated with a size of a first value distribution range, the first value distribution range is a distribution range determined based on a feature value in the first training sample and a second value distribution range, the second value distribution range is a distribution range of feature values in the historical training sample set of the first node, and the historical split cost of the first node is negatively correlated with a size of the second value distribution range.

7. The method according to claim 6, wherein the current split cost of the first node is a reciprocal of a sum of spans of feature values that are in all feature dimensions and that fall within the first value distribution range, and the historical split cost of the first node is a reciprocal of a sum of spans of feature values that are in all the feature dimensions and that fall within the second value distribution range.

8. The method according to claim 6, wherein the adding an associated second node comprises:

determining span ranges of feature values that are in all feature dimensions and that fall within the first value distribution range; and
adding the second node based on a first split point in a first split dimension, wherein a value range that is in the first value distribution range and in which a value in the first split dimension is not greater than a value of the first split point is allocated to a left child node of the second node, a value range that is in the first value distribution range and in which a value in the first split dimension is greater than the value of the first split point is allocated to a right child node of the second node, the first split dimension is a split dimension determined from all the feature dimensions based on the span ranges of the feature values in all the feature dimensions, and the first split point is a value point that is determined in the first split dimension of the first value distribution range and that is used for split, wherein
when the first split dimension is different from a second split dimension, the second node is a parent node or a child node of the first node, the second split dimension is a historical split dimension of the first node in the machine learning model, and a second split point is a historical split point of the first node in the machine learning model;

when the first split dimension is the same as the second split dimension, and the first split point is located on the right of the second split point, the second node is a parent node of the first node, and the first node is a left child node of the second node; or

when the first split dimension is the same as the second split dimension, and the first split point is located on the left of the second split point, the second node is a left child node of the first node.

9. The method according to claim 6, wherein a first split dimension is a feature dimension randomly selected from all feature dimensions of the first value distribution range, or a first split dimension is a feature dimension that corresponds to a largest span and that is in all feature dimensions of the first value distribution range; and/or a first split point is a value point randomly selected in the first split dimension of the first value distribution range.

10. The method according to any one of claims 5 to 9, wherein the adding an associated second node comprises:

adding the second node when a sum of a quantity of samples in the historical training sample set of the first node and a quantity of first training samples is greater than a first sample quantity threshold; and
the method further comprises:
stopping incremental training of the machine learning model when the sum of the quantity of samples in the historical training sample set of the first node and the quantity of first training samples is not greater than the first sample quantity threshold.

11. The method according to any one of claims 5 to 10, wherein the method further comprises:

combining a first non-leaf node and a second non-leaf node in the machine learning model, and combining a first leaf node and a second leaf node, to obtain a reduced machine learning model, wherein the reduced machine learning model is used to predict a classification result; or
receiving a reduced machine learning model sent by the first analysis device, wherein the reduced machine learning model is obtained after the first analysis device combines a first non-leaf node and a second non-leaf node in the machine learning model, and combines a first leaf node and a second leaf node, wherein
the first leaf node is a child node of the first non-leaf node, the second leaf node is a child node of the second non-leaf node, the first leaf node and the second leaf node comprise a same classification result, and span ranges of feature values that are in historical training sample sets allocated to the two leaf nodes and that are in a same feature dimension are adjacent.

12. The method according to any one of claims 5 to 11, wherein each node in the machine learning model correspondingly stores node information, the node information of any node in the machine learning model comprises label distribution information, the label distribution information is used to reflect proportions of labels of different categories, of a sample in a historical training sample set allocated to the corresponding node, to a total label quantity, the total label quantity is a total quantity of labels corresponding to the sample in the historical training sample set allocated to the any node, node information of any non-leaf node further comprises historical split information, and the historical split information is information used to split the corresponding node.

13. The method according to claim 12, wherein the historical split information comprises location information of the corresponding node in the machine learning model, a split dimension of the corresponding node, a split point of the corresponding node, a value distribution range of a historical training sample set allocated to the corresponding node, and a historical split cost of the corresponding node; and
the label distribution information comprises the total label quantity and a quantity of labels of a same category of the sample in the historical training sample set allocated to the corresponding node; or the proportions of the labels of different categories, of the sample in the historical training sample set allocated to the corresponding node, to the total label quantity.

14. The method according to any one of claims 1 to 13, wherein the first training sample set comprises a sample that is obtained by screening a sample obtained by the local analysis device and that meets a low discrimination condition, and the low discrimination condition comprises at least one of the following:

an absolute value of a difference between any two probabilities in a target probability set obtained by predicting a sample by using the machine learning model is less than a first difference threshold, wherein the target probability set comprises probabilities of first n classification results arranged in descending order of probabilities, 1<n<m, and m is a total quantity of probabilities obtained by predicting the sample by using the machine learning model; or

an absolute value of a difference between any two probabilities in probabilities obtained by predicting a sample by using the machine learning model is less than a second difference threshold; or

an absolute value of a difference between a highest probability and a lowest probability in probabilities that are of a plurality of classification results and that are obtained by predicting a sample by using the machine learning model is less than a third difference threshold; or

an absolute value of a difference between any two probabilities in probabilities that are of a plurality of classification results and that are obtained by predicting a sample by using the machine learning model is less than a fourth difference threshold; or

probability distribution entropy E that is of a plurality of classification results and that is obtained by predicting a sample by using the machine learning model is greater than a specified distribution entropy threshold, and E meets:

$$E = -\sum_i P(\mathrm{x}_i)\log_b P(\mathrm{x}_i)$$

,

wherein

$x_i$ represents an $i^{th}$ classification result, $P(x_i)$ represents a probability that is of the $i^{th}$ classification result of the sample and that is obtained through prediction, b is a specified base, and $0 \le P(x_i) \le 1$.

15. A model training method, applied to a first analysis device, and comprising:

performing offline training based on a historical training sample set to obtain a machine learning model; and sending the machine learning model to a plurality of local analysis devices, so that the local analysis device performs incremental training on the machine learning model based on a first training sample set, wherein feature data in a training sample set used by any local analysis device to train the machine learning model is feature data from a local network corresponding to the any local analysis device.

16. The method according to claim 15, wherein the historical training sample set is a set of training samples sent by the plurality of local analysis devices.

17. The method according to claim 15, wherein after the machine learning model is sent to the local analysis device, the method further comprises:

receiving a retraining request sent by the local analysis device, and retraining the machine learning model based on a training sample set sent by the local analysis device that sends the retraining request; or receiving a retraining request sent by the local analysis device, and retraining the machine learning model based on a training sample set sent by the local analysis device that sends the retraining request and a training sample set sent by another local analysis device; or receiving training sample sets sent by at least two of the local analysis devices, and retraining the machine learning model based on the received training sample sets.

18. The method according to any one of claims 15 to 17, wherein the machine learning model is a tree model, and the performing offline training based on a historical training sample set to obtain a machine learning model comprises:

obtaining a historical training sample set having a determined label, wherein a training sample in the historical training sample set comprises feature data in one or more feature dimensions, and the feature data is value data; creating a root node; using the root node as a third node, and executing an offline training process until a split stop condition is met; and determining a classification result for each leaf node to obtain the machine learning model, wherein the offline training process comprises:

splitting the third node to obtain a left child node and a right child node of the third node; using the left child node as an updated third node, using, as an updated historical training sample set, a left sample set that is in the historical training sample set and that is allocated to the left child node, and executing the offline training process again; and
using the right child node as the updated third node, using, as the updated historical training sample set, a right sample set that is in the historical training sample set and that is allocated to the right child node, and executing the offline training process again.

19. The method according to claim 18, wherein the splitting the third node to obtain a left child node and a right child node of the third node comprises:
splitting the third node based on a value distribution range of the historical training sample set to obtain the left child node and the right child node of the third node, wherein the value distribution range of the historical training sample set is a distribution range of feature values in the historical training sample set.

20. The method according to claim 19, wherein the splitting the third node based on a value distribution range of the historical training sample set to obtain the left child node and the right child node of the third node comprises:

determining a third split dimension from all feature dimensions of the historical training sample set;
determining a third split point in the third split dimension of the historical training sample set; and
allocating, to the left child node, a value range that is in a third value distribution range and in which a value in the third split dimension is not greater than a value of the third split point, and allocating, to the right child node, a value range that is in the third value distribution range and in which a value in the third split dimension is greater than the value of the third split point, wherein the third value distribution range is the distribution range of the feature values in the historical training sample set of the third node.

21. The method according to any one of claims 18 to 20, wherein the split stop condition comprises at least one of the following:

a current split cost of the third node is greater than a split cost threshold; or
a quantity of samples in the historical training sample set is less than a second sample quantity threshold; or
a quantity of split times corresponding to the third node is greater than a threshold of a quantity of split times; or
a depth of the third node in the machine learning model is greater than a depth threshold; or
a proportion of a quantity of labels with a largest proportion, in labels corresponding to the historical training sample set, to a total label quantity of the labels corresponding to the historical training sample set is greater than a specified proportion threshold.

22. The method according to claim 21, wherein the current split cost of the third node is negatively correlated with a size of the distribution range of the feature values in the historical training sample set.

23. The method according to claim 22, wherein the current split cost of the third node is a reciprocal of a sum of spans of feature values that are in all the feature dimensions and that are in the historical training sample set.

24. The method according to any one of claims 18 to 23, wherein the method further comprises:

combining a first non-leaf node and a second non-leaf node in the machine learning model, and combining a first leaf node and a second leaf node, to obtain a reduced machine learning model, wherein the reduced machine learning model is used to predict a classification result, the first leaf node is a child node of the first non-leaf node, the second leaf node is a child node of the second non-leaf node, the first leaf node and the second leaf node comprise a same classification result, and span ranges of feature values that are in historical training sample sets allocated to the two leaf nodes and that are in a same feature dimension are adjacent; and
sending the reduced machine learning model to the local analysis device, so that the local analysis device predicts a classification result based on the reduced machine learning model.

25. The method according to any one of claims 18 to 24, wherein each node in the machine learning model correspondingly stores node information, the node information of any node in the machine learning model comprises label distribution information, the label distribution information is used to reflect proportions of labels of different categories, of a sample in a historical training sample set allocated to the corresponding node, to a total label quantity, the total label quantity is a total quantity of labels corresponding to the sample in the historical training sample set allocated to the any node, node information of any non-leaf node further comprises historical split information, and the historical split information is information used to split the corresponding node.

**26.** The method according to claim 25, wherein the historical split information comprises location information of the corresponding node in the machine learning model, a split dimension of the corresponding node, a split point of the corresponding node, a value distribution range of a historical training sample set allocated to the corresponding node, and a historical split cost of the corresponding node; and

the label distribution information comprises the total label quantity and a quantity of labels of a same category of the sample in the historical training sample set allocated to the corresponding node; or the proportions of the labels of different categories, of the sample in the historical training sample set allocated to the corresponding node, to the total label quantity.

**27.** The method according to any one of claims 15 to 26, wherein the first training sample set comprises a sample that is obtained by screening a sample obtained by the local analysis device and that meets a low discrimination condition, and the low discrimination condition comprises at least one of the following:

an absolute value of a difference between any two probabilities in a target probability set obtained by predicting a sample by using the machine learning model is less than a first difference threshold, wherein the target probability set comprises probabilities of first n classification results arranged in descending order of probabilities, $1<n<m$, and m is a total quantity of probabilities obtained by predicting the sample by using the machine learning model; or

an absolute value of a difference between any two probabilities in probabilities obtained by predicting a sample by using the machine learning model is less than a second difference threshold; or

an absolute value of a difference between a highest probability and a lowest probability in probabilities that are of a plurality of classification results and that are obtained by predicting a sample by using the machine learning model is less than a third difference threshold; or

an absolute value of a difference between any two probabilities in probabilities that are of a plurality of classification results and that are obtained by predicting a sample by using the machine learning model is less than a fourth difference threshold; or

probability distribution entropy E that is of a plurality of classification results and that is obtained by predicting a sample by using the machine learning model is greater than a specified distribution entropy threshold, and E meets:

$$E = -\sum_i P(\mathrm{x}_i)\log_b P(\mathrm{x}_i)$$

,

wherein

$\mathrm{x}_i$ represents an $i^{th}$ classification result, $P(\mathrm{x}_i)$ represents a probability that is of the $i^{th}$ classification result of the sample and that is obtained through prediction, b is a specified base, and $0\leq P(\mathrm{x}_i)\leq 1$.

**28.** A model training apparatus, applied to a local analysis device, and comprising:

a receiving module, configured to receive a machine learning model sent by a first analysis device; and
an incremental training module, configured to perform incremental training on the machine learning model based on a first training sample set, wherein feature data in the first training sample set is feature data from a local network corresponding to the local analysis device.

**29.** The apparatus according to claim 28, wherein the apparatus further comprises:

a prediction module, configured to: after the machine learning model sent by the first analysis device is received, predict a classification result by using the machine learning model; and
a first sending module, configured to send prediction information to an evaluation device, wherein the prediction information comprises the predicted classification result, so that the evaluation device evaluates, based on the prediction information, whether the machine learning model is degraded, wherein
the incremental training module is configured to:
after a training instruction sent by the evaluation device is received, perform incremental training on the machine learning model based on the first training sample set, wherein the training instruction is used to instruct to train the machine learning model.

**30.** The apparatus according to claim 29, wherein the machine learning model is used to predict a classification result of to-be-predicted data consisting of one or more pieces of key performance indicator KPI feature data, and the KPI feature data is feature data of a KPI time series or is KPI data; and

the prediction information further comprises a KPI category corresponding to the KPI feature data in the to-be-predicted data, an identifier of a device to which the to-be-predicted data belongs, and a collection moment of KPI data corresponding to the to-be-predicted data.

31. The apparatus according to any one of claims 28 to 30, wherein the apparatus further comprises:
a second sending module, configured to: when performance of the machine learning model obtained through incremental training does not meet a performance fulfillment condition, send a retraining request to the first analysis device, wherein the retraining request is used to request the first analysis device to retrain the machine learning model.

32. The apparatus according to any one of claims 28 to 31, wherein the machine learning model is a tree model, and the incremental training module is configured to:
for any training sample in the first training sample set, start traversal from a root node of the machine learning model, to execute the following traversal process:

when a current split cost of a traversed first node is less than a historical split cost of the first node, adding an associated second node, wherein the first node is any non-leaf node in the machine learning model, and the second node is a parent node or a child node of the first node; or

when a current split cost of a first node is not less than a historical split cost of the first node, traversing a node in a subtree of the first node, determining a traversed node as a new first node, and executing the traversal process again until a current split cost of the traversed first node is less than a historical split cost of the first node or until traversal is performed at a target depth, wherein

the current split cost of the first node is a cost at which node split is performed on the first node based on a first training sample, the first training sample is any training sample in the first training sample set, the first training sample comprises feature data in one or more feature dimensions, the feature data is value data, the historical split cost of the first node is a cost at which node split is performed on the first node based on a historical training sample set of the first node, and the historical training sample set of the first node is a set of samples that are grouped to the first node and that are in a historical training sample set of the machine learning model.

33. The apparatus according to claim 32, wherein the current split cost of the first node is negatively correlated with a size of a first value distribution range, the first value distribution range is a distribution range determined based on a feature value in the first training sample and a second value distribution range, the second value distribution range is a distribution range of feature values in the historical training sample set of the first node, and the historical split cost of the first node is negatively correlated with a size of the second value distribution range.

34. The apparatus according to claim 33, wherein the current split cost of the first node is a reciprocal of a sum of spans of feature values that are in all feature dimensions and that fall within the first value distribution range, and the historical split cost of the first node is a reciprocal of a sum of spans of feature values that are in all the feature dimensions and that fall within the second value distribution range.

35. The apparatus according to claim 33, wherein the incremental training module is configured to:

determine span ranges of feature values that are in all feature dimensions and that fall within the first value distribution range; and

add the second node based on a first split point in a first split dimension, wherein a value range that is in the first value distribution range and in which a value in the first split dimension is not greater than a value of the first split point is allocated to a left child node of the second node, a value range that is in the first value distribution range and in which a value in the first split dimension is greater than the value of the first split point is allocated to a right child node of the second node, the first split dimension is a split dimension determined from all the feature dimensions based on the span ranges of the feature values in all the feature dimensions, and the first split point is a value point that is determined in the first split dimension of the first value distribution range and that is used for split, wherein

when the first split dimension is different from a second split dimension, the second node is a parent node or a child node of the first node, the second split dimension is a historical split dimension of the first node in the machine learning model, and a second split point is a historical split point of the first node in the machine learning model;

when the first split dimension is the same as the second split dimension, and the first split point is located on the right of the second split point, the second node is a parent node of the first node, and the first node is a left child node of the second node; or

when the first split dimension is the same as the second split dimension, and the first split point is located on the left of the second split point, the second node is a left child node of the first node.

36. The apparatus according to claim 33, wherein a first split dimension is a feature dimension randomly selected from all feature dimensions of the first value distribution range, or a first split dimension is a feature dimension that corresponds to a largest span and that is in all feature dimensions of the first value distribution range; and/or a first split point is a value point randomly selected in the first split dimension of the first value distribution range.

37. The apparatus according to any one of claims 32 to 36, wherein the incremental training module is configured to:

add the second node when a sum of a quantity of samples in the historical training sample set of the first node and a quantity of first training samples is greater than a first sample quantity threshold; and the apparatus further comprises:
a stop module, configured to stop incremental training of the machine learning model when the sum of the quantity of samples in the historical training sample set of the first node and the quantity of first training samples is not greater than the first sample quantity threshold.

38. The apparatus according to any one of claims 32 to 37, wherein the apparatus further comprises:

a combination module, configured to: combine a first non-leaf node and a second non-leaf node in the machine learning model, and combine a first leaf node and a second leaf node, to obtain a reduced machine learning model, wherein the reduced machine learning model is used to predict a classification result; or the receiving module is further configured to receive a reduced machine learning model sent by the first analysis device, wherein the reduced machine learning model is obtained after the first analysis device combines a first non-leaf node and a second non-leaf node in the machine learning model, and combines a first leaf node and a second leaf node, wherein
the first leaf node is a child node of the first non-leaf node, the second leaf node is a child node of the second non-leaf node, the first leaf node and the second leaf node comprise a same classification result, and span ranges of feature values that are in historical training sample sets allocated to the two leaf nodes and that are in a same feature dimension are adjacent.

39. The apparatus according to any one of claims 32 to 38, wherein each node in the machine learning model correspondingly stores node information, the node information of any node in the machine learning model comprises label distribution information, the label distribution information is used to reflect proportions of labels of different categories, of a sample in a historical training sample set allocated to the corresponding node, to a total label quantity, the total label quantity is a total quantity of labels corresponding to the sample in the historical training sample set allocated to the any node, node information of any non-leaf node further comprises historical split information, and the historical split information is information used to split the corresponding node.

40. The apparatus according to claim 39, wherein the historical split information comprises location information of the corresponding node in the machine learning model, a split dimension of the corresponding node, a split point of the corresponding node, a value distribution range of a historical training sample set allocated to the corresponding node, and a historical split cost of the corresponding node; and
the label distribution information comprises the total label quantity and a quantity of labels of a same category of the sample in the historical training sample set allocated to the corresponding node; or the proportions of the labels of different categories, of the sample in the historical training sample set allocated to the corresponding node, to the total label quantity.

41. The apparatus according to any one of claims 28 to 40, wherein the first training sample set comprises a sample that is obtained by screening a sample obtained by the local analysis device and that meets a low discrimination condition, and the low discrimination condition comprises at least one of the following:

an absolute value of a difference between any two probabilities in a target probability set obtained by predicting a sample by using the machine learning model is less than a first difference threshold, wherein the target probability set comprises probabilities of first n classification results arranged in descending order of probabilities, $1<n<m$, and m is a total quantity of probabilities obtained by predicting the sample by using the machine learning model; or

an absolute value of a difference between any two probabilities in probabilities obtained by predicting a sample by using the machine learning model is less than a second difference threshold; or

an absolute value of a difference between a highest probability and a lowest probability in probabilities that are of a plurality of classification results and that are obtained by predicting a sample by using the machine learning model is less than a third difference threshold; or

an absolute value of a difference between any two probabilities in probabilities that are of a plurality of classification results and that are obtained by predicting a sample by using the machine learning model is less than a fourth difference threshold; or

probability distribution entropy E that is of a plurality of classification results and that is obtained by predicting a sample by using the machine learning model is greater than a specified distribution entropy threshold, and E meets:

$$E = -\sum_i P(\mathrm{x_i}) \log_b P(\mathrm{x_i})$$

,

wherein

$x_i$ represents an $i^{th}$ classification result, $P(x_i)$ represents a probability that is of the $i^{th}$ classification result of the sample and that is obtained through prediction, b is a specified base, and $0 \leq P(x_i) \leq 1$.

42. A model training apparatus, applied to a first analysis device, and comprising:

an offline training module, configured to perform offline training based on a historical training sample set to obtain a machine learning model; and

a sending module, configured to send the machine learning model to a plurality of local analysis devices, so that the local analysis device performs incremental training on the machine learning model based on a first training sample set, wherein feature data in a training sample set used by any local analysis device to train the machine learning model is feature data from a local network corresponding to the any local analysis device.

43. The apparatus according to claim 42, wherein the historical training sample set is a set of training samples sent by the plurality of local analysis devices.

44. The apparatus according to claim 42, wherein the apparatus further comprises:

a receiving module, configured to:

after the machine learning model is sent to the local analysis device, receive a retraining request sent by the local analysis device, and retrain the machine learning model based on a training sample set sent by the local analysis device that sends the retraining request; or

receive a retraining request sent by the local analysis device, and retrain the machine learning model based on a training sample set sent by the local analysis device that sends the retraining request and a training sample set sent by another local analysis device; or

receive training sample sets sent by at least two of the local analysis devices, and retrain the machine learning model based on the received training sample sets.

45. The apparatus according to any one of claims 42 to 44, wherein the machine learning model is a tree model, and the offline training module is configured to:

obtain a historical training sample set having a determined label, wherein a training sample in the historical training sample set comprises feature data in one or more feature dimensions, and the feature data is value data; create a root node;

use the root node as a third node, and execute an offline training process until a split stop condition is met; and determine a classification result for each leaf node to obtain the machine learning model, wherein the offline training process comprises:

splitting the third node to obtain a left child node and a right child node of the third node; using the left child node as an updated third node, using, as an updated historical training sample set, a left sample set that is in the historical training sample set and that is allocated to the left child node, and executing the offline training process again; and

using the right child node as the updated third node, using, as the updated historical training sample set, a right sample set that is in the historical training sample set and that is allocated to the right child node, and executing the offline training process again.

**46.** The apparatus according to claim 45, wherein the offline training module is configured to:

split the third node based on a value distribution range of the historical training sample set to obtain the left child node and the right child node of the third node, wherein the value distribution range of the historical training sample set is a distribution range of feature values in the historical training sample set.

**47.** The apparatus according to claim 46, wherein the offline training module is configured to:

determine a third split dimension from all feature dimensions of the historical training sample set;
determine a third split point in the third split dimension of the historical training sample set; and
allocate, to the left child node, a value range that is in a third value distribution range and in which a value in the third split dimension is not greater than a value of the third split point, and allocate, to the right child node, a value range that is in the third value distribution range and in which a value in the third split dimension is greater than the value of the third split point, wherein the third value distribution range is the distribution range of the feature values in the historical training sample set of the third node.

**48.** The apparatus according to any one of claims 45 to 47, wherein the split stop condition comprises at least one of the following:

a current split cost of the third node is greater than a split cost threshold; or
a quantity of samples in the historical training sample set is less than a second sample quantity threshold; or
a quantity of split times corresponding to the third node is greater than a threshold of a quantity of split times; or
a depth of the third node in the machine learning model is greater than a depth threshold; or
a proportion of a quantity of labels with a largest proportion, in labels corresponding to the historical training sample set, to a total label quantity of the labels corresponding to the historical training sample set is greater than a specified proportion threshold.

**49.** The apparatus according to claim 48, wherein the current split cost of the third node is negatively correlated with a size of the distribution range of the feature values in the historical training sample set.

**50.** The apparatus according to claim 49, wherein the current split cost of the third node is a reciprocal of a sum of spans of feature values that are in all the feature dimensions and that are in the historical training sample set.

**51.** The apparatus according to any one of claims 45 to 50, wherein the apparatus further comprises:

a combination module, configured to: combine a first non-leaf node and a second non-leaf node in the machine learning model, and combine a first leaf node and a second leaf node, to obtain a reduced machine learning model, wherein the reduced machine learning model is used to predict a classification result, the first leaf node is a child node of the first non-leaf node, the second leaf node is a child node of the second non-leaf node, the first leaf node and the second leaf node comprise a same classification result, and span ranges of feature values that are in historical training sample sets allocated to the two leaf nodes and that are in a same feature dimension are adjacent, wherein
the sending module is further configured to send the reduced machine learning model to the local analysis device, so that the local analysis device predicts a classification result based on the reduced machine learning model.

**52.** The apparatus according to any one of claims 45 to 51, wherein each node in the machine learning model correspondingly stores node information, the node information of any node in the machine learning model comprises label distribution information, the label distribution information is used to reflect proportions of labels of different categories, of a sample in a historical training sample set allocated to the corresponding node, to a total label quantity, the total label quantity is a total quantity of labels corresponding to the sample in the historical training sample set allocated to the any node, node information of any non-leaf node further comprises historical split information, and the historical split information is information used to split the corresponding node.

53. The apparatus according to claim 52, wherein the historical split information comprises location information of the corresponding node in the machine learning model, a split dimension of the corresponding node, a split point of the corresponding node, a value distribution range of a historical training sample set allocated to the corresponding node, and a historical split cost of the corresponding node; and

the label distribution information comprises the total label quantity and a quantity of labels of a same category of the sample in the historical training sample set allocated to the corresponding node; or the proportions of the labels of different categories, of the sample in the historical training sample set allocated to the corresponding node, to the total label quantity.

54. The apparatus according to any one of claims 42 to 53, wherein the first training sample set comprises a sample that is obtained by screening a sample obtained by the local analysis device and that meets a low discrimination condition, and the low discrimination condition comprises at least one of the following:

an absolute value of a difference between any two probabilities in a target probability set obtained by predicting a sample by using the machine learning model is less than a first difference threshold, wherein the target probability set comprises probabilities of first n classification results arranged in descending order of probabilities, $1<n<m$, and m is a total quantity of probabilities obtained by predicting the sample by using the machine learning model; or

an absolute value of a difference between any two probabilities in probabilities obtained by predicting a sample by using the machine learning model is less than a second difference threshold; or

an absolute value of a difference between a highest probability and a lowest probability in probabilities that are of a plurality of classification results and that are obtained by predicting a sample by using the machine learning model is less than a third difference threshold; or

an absolute value of a difference between any two probabilities in probabilities that are of a plurality of classification results and that are obtained by predicting a sample by using the machine learning model is less than a fourth difference threshold; or

probability distribution entropy E that is of a plurality of classification results and that is obtained by predicting a sample by using the machine learning model is greater than a specified distribution entropy threshold, and E meets:

$$E = -\sum_i P(\mathrm{x}_i)\log_b P(\mathrm{x}_i)$$

,

wherein

$x_i$ represents an $i^{th}$ classification result, $P(x_i)$ represents a probability that is of the $i^{th}$ classification result of the sample and that is obtained through prediction, b is a specified base, and $0 \leq P(x_i) \leq 1$.

55. A model training apparatus, comprising a processor and a memory, wherein

the memory is configured to store a computer program, wherein the computer program comprises program instructions; and

the processor is configured to invoke the computer program to implement the model training method according to any one of claims 1 to 14 or implement the model training method according to any one of claims 15 to 27.

56. A computer storage medium, wherein the computer storage medium stores instructions, and when the instructions are executed by a processor, the model training method according to any one of claims 1 to 14 is implemented, or the model training method according to any one of claims 15 to 27 is implemented.

57. A model training system, comprising a first analysis device and a plurality of local analysis devices, wherein the first analysis device comprises the model training apparatus according to any one of claims 28 to 41, and the local analysis device comprises the model training apparatus according to any one of claims 42 to 54.

101

102

102

102

FIG. 1

101

102

102

102

103

103

103

103

103

FIG. 2

FIG. 3

```
┌─────────────────────┐                          ┌─────────────────────┐
│                     │                          │   Local analysis    │
│ First analysis device│                         │       device        │
└─────────┬───────────┘                          └──────────┬──────────┘
          │                                                 │
┌─────────┴────────────────────┐                            │
│ 401. Perform offline training │                            │
│  based on a historical        │                            │
│  training sample set to       │                            │
│  obtain a machine learning    │                            │
│  model                        │                            │
└─────────┬────────────────────┘                            │
          │  ┌──────────────────────────┐                   │
          │  │ 402. Send the machine     │                  │
          │  │       learning model      │────────────────▶ │
          │  └──────────────────────────┘                   │
          │                        ┌──────────────────────────────┐
          │                        │ 403. Predict a classification │
          │                        │  result by using the machine  │
          │                        │  learning model               │
          │                        └──────────────────────────────┘
          │                        ┌──────────────────────────────┐
          │                        │ 404. Perform incremental      │
          │                        │  training on the machine      │
          │                        │  learning model based on a    │
          │                        │  first training sample set    │
          │                        │  obtained by the local        │
          │                        │  analysis device              │
          │                        └──────────────────────────────┘
  ┌───────┴──────────────────────────────────┐              │
  │ 405. When performance of the machine       │             │
  │  learning model obtained through           │             │
  │  incremental training does not meet a      │◀────────────│
  │  performance fulfillment condition,        │             │
  │  trigger a cloud analysis device to        │             │
  │  retrain the machine learning model        │             │
  └────────────────────────────────────────────┘            │
          │                                                 │
```

FIG. 4

```
┌─────────────────────┐                        ┌─────────────────────┐
│   Local analysis    │                        │  Evaluation device  │
│      device         │                        │                     │
└─────────────────────┘                        └─────────────────────┘
           │                                               │
           │   ┌──────────────────────────┐                │
           │   │  4041. Send prediction   │                │
           ├───│       information        │───────────────▶│
           │   └──────────────────────────┘                │
           │                                               │
           │        ┌──────────────────────────────────┐   │
           │        │ 4042. Evaluate, based on the      │   │
           │        │ prediction information, whether a │   │
           │        │ machine learning model is degraded│   │
           │        └──────────────────────────────────┘   │
           │                                               │
           │   ┌──────────────────────────────┐            │
           │   │ 4043. After determining that │            │
           │   │ the machine learning model   │            │
           │◀──│ is degraded, the evaluation  │────────────┤
           │   │ device sends a training      │            │
           │   │ instruction to the local     │            │
           │   │ analysis device              │            │
           │   └──────────────────────────────┘            │
           │                                               │
  ┌─────────────────────────────────────────┐              │
  │ 4044. After receiving the training       │              │
  │ instruction sent by the evaluation device,│             │
  │ perform incremental training on the       │             │
  │ machine learning model based on a first   │             │
  │ training sample set                       │             │
  └─────────────────────────────────────────┘              │
           │                                               │
         ──┴──                                           ──┴──
```

FIG. 5

FIG. 6

FIG. 7

FIG. 8

Split cost

FIG. 9

FIG. 10

EP 4 024 261 A1

FIG. 11

FIG. 12

Q4

$x_1 > 0.2$

Q6

$x_2 > 0.4$

a

b

c

FIG. 13

Q5

$x_1 > 0.7$

Q4

$x_1 > 0.2$

Q6

$x_2 > 0.4$

a

b

c

d

FIG. 14

Q4

$x_1>0.2$

Q7

$x_1>0.1$

Q6

$x_2>0.4$

b a b c

FIG. 15

Q8

x>a3

Q9

y>b3

Q10

y>b4

b

c
Q101

c Q91

a

a1    a3    a2

b1                                    x

2
    U

b4

3                    1

b3

4

b2

y

FIG. 16

FIG. 17

FIG. 18

FIG. 19

50

Model training apparatus

Receiving module — 501

Incremental training module — 502

FIG. 20

50

Model training apparatus

Receiving module — 501

Incremental training module — 502

Prediction module — 503

First sending module — 504

FIG. 21

50

Model training apparatus

Receiving module — 501

Incremental training module — 502

Second sending module — 505

FIG. 22

50

Model training apparatus

Receiving module — 501

Incremental training module — 502

Combination module — 506

FIG. 23

60

Model training apparatus

Offline training module — 601

Sending module — 602

FIG. 24

60

Model training apparatus

Offline training module — 601

Sending module — 602

Receiving module — 603

FIG. 25

60

Model training apparatus

Offline training module — 601

Sending module — 602

Combination module — 604

FIG. 26

70

702 — Memory

701 — Processor

Communication bus 703

704 — Communication interface

FIG. 27

## INTERNATIONAL SEARCH REPORT

| | International application No. |
|---|---|
| | **PCT/CN2020/115770** |

| A. | CLASSIFICATION OF SUBJECT MATTER |
|---|---|
| | G06F 30/27(2020.01)i;  G06N 20/00(2019.01)i |

According to International Patent Classification (IPC) or to both national classification and IPC

| B. | FIELDS SEARCHED |
|---|---|

Minimum documentation searched (classification system followed by classification symbols)

G06F; G06N

Documentation searched other than minimum documentation to the extent that such documents are included in the fields searched

Electronic data base consulted during the international search (name of data base and, where practicable, search terms used)

EPODOC, WPI, CNPAT, CNKI: 数据分析, 局点, 网络, 机器学习模型, 特征数据, 分发, 训练, 样本, 离线, 增量, 云, data, analysis, network, machine, learning, model, character+, offline, training, sample, distribute, incremental, cloud

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110221558 A (ZHENJIANG SILIAN MECHATRONIC TECHNOLOGY CO., LTD.) 10 September 2019 (2019-09-10)<br>description, paragraphs [0005]-[0043], and figures 1-6 | 1-57 |
| Y | CN 108173708 A (BEIJING TOPSEC NETWORK SECURITY TECHNOLOGY CO., LTD. et al.) 15 June 2018 (2018-06-15)<br>description, paragraphs [0009]-[0106], and figures 1-6 | 1-57 |
| A | CN 109670583 A (ZHEJIANG PUBLIC INFORMATION INDUSTRY CO., LTD.) 23 April 2019 (2019-04-23)<br>entire document | 1-57 |
| A | US 2016300156 A1 (FACEBOOK INC.) 13 October 2016 (2016-10-13)<br>entire document | 1-57 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 December 2020** | **17 December 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/115770**

| Patent document cited in search report | | | Publication date (day/month/year) | Patent family member(s) | Publication date (day/month/year) |
|---|---|---|---|---|---|
| CN | 110221558 | A | 10 September 2019 | None | |
| CN | 108173708 | A | 15 June 2018 | None | |
| CN | 109670583 | A | 23 April 2019 | None | |
| US | 2016300156 | A1 | 13 October 2016 | None | |

Form PCT/ISA/210 (patent family annex) (January 2015)